# EUROPEAN PATENT SPECIFICATION

(11) **EP 1 257 129 B1**
(45) Date of publication and mention of the grant of the patent: **02.02.2005**
(21) Application number: 01610120.6
(22) Date of filing: 22.11.2001
(51) Int. Cl.: H04Q 3/00, H04L 29/06, H04L 12/24

(54) **Service triggering framework**
Architektur zum auslösen der Dienste
Structure permettant de déclencher des services

(30) Priority: 07.05.2001 DK 200100707
(43) Date of publication of application: 13.11.2002
(73) Proprietor: Telefonaktiebolaget LM Ericsson (publ), 164 83 Stockholm (SE)
(72) Inventor: Steenfeldt, Rico Werni, 2700 Bronshoj (DK); Smith, Henry Gerard, Edge Hill, London SW19 4LL (GB)
(74) Representative: Boesen, Johnny Peder

(56) References cited:
- ZAVE, PAMELA: "An Architecture for Three Challenging Features" INTERNET TELEPHONY WORKSHOP 2001, [Online] 3 April 2001 (2001-04-03), XP002196887 New York Retrieved from the Internet: <URL:http://iptel.org/2001/pg/final_progra m/28.pdf> [retrieved on 2002-04-22]
- KRISTENSEN, ANDERS: "Programming SIP Services" IP TELEPHONY WORKSHOP 2000, [Online] 12 April 2000 (2000-04-12), XP002196888 Berlin Retrieved from the Internet: <URL:http://www.fokus.gmd.de/research/cc/g lone/projects/iptel2000/crc/68/68-kristens en-paper.pdf> [retrieved on 2002-04-22]
- ROSENBERG, JONATHAN: "Programming Internet Telephony Services" IEEE NETWORK MAGAZINE, [Online] vol. 13, no. 3, 1 June 1999 (1999-06-01), pages 0-25, XP002196889 Retrieved from the Internet: <URL:http://www.jdrosen.net/papers/program _report.ps> [retrieved on 2002-04-22]
- IBM: "Access Control List - Simple Example 1" XML SECURITY SUITE, [Online] 14 October 2000 (2000-10-14), XP002196890 Retrieved from the Internet: <URL:http://www.trl.ibm.com/projects/xml/x ss4j/docs/xacl-ex-simple1.html> [retrieved on 2002-04-22]
- HANDLY/SCHULZRINNE/SCHOOLER/ROSENBERG: "SIP: Session Initiation Protocol" IETF - RFC2543BIS-02, [Online] 24 November 2000 (2000-11-24), XP002196891 Retrieved from the Internet: <URL:http://www.cs.columbia.edu/sip/drafts /draft-ietf-sip-rfc2543bis-02.pdf> [retrieved on 2002-04-22]
- LENNOX, J. - SCHULZRINNE, H.: "Feature Interaction in Internet Telephony" PROCEEDINGS OF THE SIXTH INTERNATIONAL WORKSHOP ON FEATURE INTERACTIONS, [Online] 1 May 2000 (2000-05-01), XP002196892 Retrieved from the Internet: <URL:http://www.cs.columbia.edu/~hgs/paper s/Lenn0005_Feature.pdf> [retrieved on 2002-04-22]
- BESSLER S.: "A Service Platform for Internet-Telecom Services using SIP" 6TH INTERNATIONAL CONFERENCE ON INTELLIGENCE IN NETWORKS, [Online] 18 - 22 September 2000, XP002196893 Retrieved from the Internet: <URL:http://www.ftw.at/Dokumente/smartnet. pdf> [retrieved on 2002-04-22]

## Description

This invention relates to the management of a plurality of services related to a communications session, the communications session being controlled by a session protocol providing session information about said communications session.

There is an increasing demand for interactive communications sessions over the Internet, such as IP telephony, multimedia sessions, video streaming, etc. Interactive communications sessions may be controlled by session protocols, such as the Session Initiation Protocol (SIP) which handles initiation, termination, and modification of sessions between users. SIP is not concerned with the type of session to be initiated, i.e. with the actual content of SIP messages, but rather with the managing of a session. This includes tasks such as determining where a user to be contacted is actually residing, delivering a description of the session that the user is being invited to, negotiating a common format for describing sessions, etc.

SIP is based on the request-response paradigm. For example, when initiating a session, a caller sends a request addressed to the user the caller wants to call, i.e. the callee. The request message is sent to the callee, typically via a number of proxy servers responsible for routing and delivering messages. Thee callee then sends a response, accepting or rejecting the invitation. The response is forwarded back through the sequence of proxy servers in the reverse order.

On top of the standard session management provided by a session protocol such as SIP, additional services may be implemented at the caller site, the callee site, or at any of the intermediate proxy servers.

Here, the term service comprises a unit of functionality which may incrementally be added to a base system and which results in an output which is perceivable by a user, such as a subscriber, an administrator, or the like. Hence, a service, e.g. call forwarding, voice mail, video conferencing, etc., is a modular extension to a base system, such as a system for managing sessions, e.g. a SIP system. The process of adding and enabling features in a base system will be called feature deployment.

During a session, features may be triggered by certain events. Triggering, i.e. the act of invoking a given application on a given event, is usually based on contractual relationships between subscribers and service providers. If more than one feature is deployed in a service network, and one or more service can be activated simultaneously for one or more users, then feature interactions occur. Here, the term feature interaction comprises the influence or modification of one feature by another. Feature interaction is an inevitable by-product of modular features. There may be desirable and undesirable feature interactions. However, it is a problem that the overall behaviour of a service network may become uncontrollable if feature interactions are not managed properly. Consequently, feature interaction is an increasing problem, as the number and complexity of service application increases with the emergence of new technologies, such as UMTS, which put heavy demands on the capabilities of service networks. These services may have been developed independently and the service providers need to be able to specify how conflicting instructions from these services are to be solved and mediated to the default behaviour of the communications protocol used.

In order to avoid feature interaction, the behaviour of multiple features may be tested ad-hoc or systematically, when adding a new service to a service network, for example by testing pairs of features. If instances of feature interactions are detected during tests or after deployment, the detected problem may be fixed, e.g. by re-designing one or more of the involved service applications.

The above approach requires a considerable amount of resources, in particular as the number and complexity of the services increases. Hence, it is a problem that the above prior art does not scale well with the number and complexity of service applications.

The article "Programming SIP Services" by Anders Kristensen et al., IP Telephony Workshop 2000, describes a JAVA based interface between services and a SIP server.

The article "An Architecture for Three Challenging Features" by Pamela Zave, Internet Telephony Workshop 2001, describes an architecture for three specific features within the context of IP telephony, namely "Location and Identification", "Switching and Spontaneous Conferencing", and "Mail". The design of these features takes feature interaction problems into consideration. This article further refers to a Distributed Feature Composition architecture (DFC) and describes a system in terms of interface boxes and feature boxes which are concurrent processes.

However, it is a problem of the above prior art system to provide improved mechanisms for avoiding feature interactions due to the changing of the context of one service by another service.

According to the invention, the above and other problems are solved by a method of managing a plurality of services triggered by a message of a session protocol controlling a communications session, as defined in claim 1.

Consequently, the invocation of services triggered during a communications session is controlled by a number of execution rules which are processed in a predetermined order, thereby controlling the order of services to be invoked. Therefore, a mechanism for triggering applications based on the service execution rules is provided which avoids an arbitrary overall behaviour due to an uncontrolled order of execution. Furthermore, by editing the execution rules, different deployment strategies may easily be implemented, thereby providing a flexible, fine-grained service deployment infrastructure which provides great flexibility in ordering the chain of services allowing to optimise the performance of the service network.

Hence, according to the invention, a flexible service deployment infrastructure is provided which allows to systematically avoid feature interactions when managing a large number of complex services, e.g. when adding, removing, suspending, re-activating, or re-locating services within a service network.

A standardised framework for defining service execution is provided which allows the distribution of the service management problem between independent stakeholders, thereby providing a method which is scalable with the number of services.

An execution rule includes one or more conditions for performing one or more actions, such as invoking a service application.

The term communications session comprises communications sessions between users of a communications network such as a TCP/IP network, a local area network, a wide area network, the Internet, or the like. Examples of communications sessions include Voice-over-Internet, IP telephony, video conferencing, video streaming, etc.

The term session protocol comprises a protocol controlling the communication session, and in particular the initiation, termination and modification of sessions. Preferably, the session protocol is based on request/response messages transmitted via the nodes of the communications network between the participating users of a communications session. An example of such a session protocol is the Session Initiation Protocol (SIP). Other examples include the H.323 protocol suite, MGCP and related protocols such as IPDC, SGCP, H.248 etc.

The term service comprises a unit of functionality which may incrementally be added to a base system. A service may offer services to subscribers, but may also offer other services, like administrative tasks to the network administrator. Examples of such services include call forwarding, call waiting, voice mail, statistics functions, call back, video conferencing, video on demand, annonymizer services, auto reply, etc. A service may be implemented using a variety of technologies, e.g. OSA, Java, CGI, Perl, C++, CPL, XML, etc.

In the context of the SIP protocol, a service is an application or a number of applications executed locally on a SIP server, e.g. as a CGI-Script or a CPL-Script, or remotely on an application server contacted by the SIP server. In the latter case, the service may be accessed and invoked using some standard naming convention, i.e. using SIP Request-URIs. Alternatively, the services may actually register themselves at the SIP server using e.g. a 3GPP OSA API framework. SIP services can be grouped into originating and terminating services, i.e. those that are associated the caller and the callee.

Services may be triggered on conditions in a message header, a message body, the SDP, or the like.

The functionality of the SIP Server that is offered to service applications is termed service features, such as access to some API, e.g. a server side OSA API, to statistical functions, or the like. Service features may further be service applications which register at the SIP Server and subsequently offer their service to be used by other service applications.

It is a further advantage of the invention that it is independent of the technology used for the implementation of the services, the signalling protocol, and the platform. Hence, a network operator does not need to know in advance which types of services that will be deployed in the service network, thereby providing a robust and extendible service deployment infrastructure.

As the number of stakeholders that may want to register their own services could be very large, there is a need for scalability. Furthermore, the number of subscribers associated with a domain may be very large, rendering the issue of scalability critical. Services may be triggered by many different types of events and invoked based on a plurality of different conditions, such as matching source and destination addresses, time-dependant, or some other pre-condition. Furthermore, non-SIP related services may be invoked on SIP events, e.g. if certain conditions are fulfilled at a given point in time. Different service technologies, such as CPL, may be used. SIP related services may be invoked on non-SIP related events, e.g. HTTP events. There may be tens of thousands of services that may be offered to tens of millions of subscribers, from tens of thousands 3rd party service providers. Consequently, the task of managing services and service interactions is a task which easily gets too big and complicated for one administrator to manage.

According to the invention, said number of execution rules is grouped into a number of rule modules, each rule module including a number of execution rules; and the method further comprises the steps of
- processing a first one of said number of rule modules resulting in a first accumulatively modified message; and
- invoking processing a second one of said number of rule modules providing the first accumulatively modified message as an input.

Consequently, by grouping the execution rules into rule modules, i.e. groups of execution rules, the problem of feature interaction is split into the problem of feature interaction between features invoked within the same rule module and interactions between rule modules. Consequently, it is an advantage of the invention, that a method of managing feature interaction is provided which scales with the number of services. In particular, when different services are provided by different service providers, e.g. different companies or different organisational entities within a company, a single provider may not have access to or may not be able to test all of the services provided. Hence, it is an advantage of the invention that the task of analysing feature interaction analysis may be split up according to rule modules and distributed to different providers. This further implies that the costs of service management may be delegated to independent parties as the number of subscribers and services grows.

The stakeholders that may want to upload/register and administer services on a SIP server could be the owner, provider or administrator of the SIP server, network operators, etc. It could also be different types of retailers, e.g. virtual telecom operators, Internet Service Providers, etc. It may also be different types of service providers, such as application service providers, content service providers, service/feature providers. Also private organizations, enterprises and subscribers may be possible stakeholders.

Consequently, according to the invention, a flexible, extensible and scalable management of contractual relationships between the stakeholders is achieved, including the management of charging, settlements, policies and security.

It is a further advantage of the invention, that it provides a modular structure of execution rules, thereby enabling the embedding of service profiles for users, user groups, subscribers, etc. It is a further advantage of the modularity that it enables reuse of rule modules, thereby further facilitating the maintenance of the service environment.

When each rule module has associated with it a priority indicative of an order of processing of said number of rule modules, the order of rule module execution is determined by a simple parameter, thereby providing easy and transparent control over the order of execution of rule modules.

When each rule module corresponds to a rule module owner authorised to edit the rule module, the administrative authority for a rule module may easily be established, thereby further facilitating the delegation of administrative authority, such as editing rule modules, feature interaction analysis within a rule module, etc.

According to the invention, the first rule module has assigned to it a privilege indicative of an authority to alter a lock flag related to a predetermined part of the accumulatively modified message and specifying whether said predetermined part of the accumulatively modified message may be modified by services invoked from at least the second rule module. Consequently, a mechanism is provided for explicitly allowing or preventing alterations of individual attributes or groups of attributes of the messages by subsequent services. Hence, an efficient tool is provided for avoiding feature interactions due to the changing of the context of one service by another service. This type of feature interaction will be referred to as violation of feature assumption which may cause ambiguous or conflicting behaviour of services. As the authority to lock and/or unlock certain attributes is linked to predetermined privileges assigned to rule modules, the network operator may detect misuse of privileges and thereby prevent unauthorised behaviour, thereby increasing the security of the method. Privilege violation may be detected at run-time and resolved, e.g. by notification and or de-activation of services.

According to a further preferred embodiment of the invention, the step of invoking processing the second rule module further comprises the step of setting said lock flag to prevent modification of the predetermined part of the accumulatively modified message by services invoked from the second rule module, unless the lock flag was marked unset by the first rule module. Consequently, by default, the message attributes are locked for subsequent changes when the control is transferred from one rule module to another. Hence, the second rule module may only change message attributes which the first rule module has explicitly marked as being unlocked, thereby further improving the control of possible feature interactions between rule modules and confining feature analysis task to within the individual rule modules. This results in a further improved scalability.

When the step of obtaining a number of execution rules further comprises the step of detecting a predetermined contractual relationship based on header information of the message; and selecting a number of rule modules based on said detected contractual relationship, a modular and scalable method is provided which enables the support for operators to host 3rd party services and/user defined services. As contractual relationships are detected on the basis of header information, those 3rd party or user-defined services which are relevant for a given message may be identified on the basis of the detected contractual relationships.

According to another preferred embodiment of the invention, the step of processing the first rule module further comprises the step of invoking a predetermined third rule module. Consequently, a rule module may invoke other rule modules, thereby providing a powerful tool for creating a hierarchy of rule modules and further improving the scalability and flexibility of the deployment infrastructure. It is an advantage of the invention that it allows the delegation from one rule module owned by one party to another rule module owned by another party. One party may invoke applications in an order which is deemed appropriate by that party and then pass control to another party which then may invoke different applications. The first party may subsequently regain control to check the output from the second party.

When this delegation is done, the first party may decide which messages properties in the forwarded message subsequent applications can change by indicating which message properties cannot be overwritten for an action.

It is an advantage of the invention that it allows a hierarchical delegation of administrative authority based on the ability to trigger rule modules from within other rule modules and lock message properties.

When the first and second rule modules are related to respective first and second access control lists specifying access rights to the corresponding first or second rule module, the violation of access rights may be detected and resolved, thereby further increasing the security of the method.

When the first and second rule modules comprise respective first and second scripts in a predetermined mark-up language, a simple language for writing rule modules is provided. Hence it is easy for an administrator to understand how to express rules and what the meaning of the rules is, thereby providing a simple mechanism for extending the basic definition of the rule language with proprietary functions. An example of such a language definition is XML.

It is a further advantage of the invention that it provides an extensible framework, i.e. it is easy to add protocols, service technologies and message properties, e.g. if a new method is added to SIP.

It is a further advantage of the invention that it provides a scalable framework, i.e. the same way of expressing rules is possible on large ISP networks and small end-user devices, e.g. 3G cell-phones.

According to another preferred embodiment of the invention, the message comprises a first and a second set of attributes; the execution rules are grouped into at least a first and a second processing class of execution rules according to corresponding constraints, where the second processing class is restricted to only modify attributes of the second set of attributes; and the step of processing the execution rules further comprises the step of processing the execution rules of the first processing class before processing any execution rule of the second processing class. Consequently, the services are divided into groups with predetermined behaviour in terms of which parts of the signalling messages they update. Hence, the services may rely on that the first set of message attributes will not be altered after the execution of the first processing class. This provides a further mechanism for splitting up the task of feature interaction analysis into manageable subtasks. In the following, the processing classes will also be referred to as processing points. The sets of attributes may comprise message header information and message body comprising the actual session content. The attributes may be further split up into different types of header information, e.g. signalling attributes etc.

It is a further advantage of the invention that it provides means for specifying how applications are allowed to interact.

Preferably, the processing classes are processed in a predetermined order for requests and responses and applied to originating, terminating and "forwarded by" services.

According to a further preferred embodiment of the invention, the message comprises a first and a second set of attributes; the execution rules are grouped into at least a first and a second processing class of execution rules according to corresponding constraints, where the second processing class is restricted to only modify attributes of the second set of attributes; and the method further comprises the step of repeating the steps of processing the first rule module and invoking processing the second rule module, where in each repetition the processing of the first and second rule modules is limited to execution rules of a corresponding processing class, and where each repetition results in a corresponding accumulatively modified message which is used as an input for a subsequent repetition. Consequently, a combination of the division onto rule modules with the concept of processing classes is provided, thereby providing a fine-grained framework for dividing the services according to administrative ownership and constraints imposed on the services.

When the processing classes are defined separately for execution rules triggered by requests and responses of the session protocol, the division of services into processing classes is further split up according to the type of message, thereby providing a more fine-grained splitting.

According to a preferred embodiment, the processing classes correspond to predetermined locations in a round trip message flow according to the session protocol, thereby simplifying the analysis of feature interaction.

Preferably, the processing classes include a first processing class of execution rules which impact signalling properties of the message, a second processing class of execution rules which impact non-signalling message body content of the message, and a third processing class of execution rules which neither impact the signalling properties nor the non-signalling message body content of the message. Here, the term signalling properties comprises SIP and SDP message properties that can be matched in a rule module condition to invoke a service.

When a resulting modified message is generated when all execution rules of the first and second processing classes are processed, the efficiency of the method is further increased, as responses may be returned without having to wait for services of the third processing class.

According to another preferred embodiment of the invention, invoking the first service further results in a second modified message; and the method further comprises the steps of processing subsequent execution rules with the first modified message as an input; and processing subsequent execution rules with the second modified message as an input. Hence, as a service may return different outputs, each of which is an input to a chain of subsequent services, a tree of cascaded chains of services may be implemented.

According to yet another preferred embodiment of the invention, the method further comprises the steps of
- storing information about which services are executed and information about which order the services are executed in;
- receiving from the first service a request for returning a notification to the first service, if a predetermined event occurs;
- storing the request in relation to the stored information; and
- upon occurrence of the event, notifying the first service according to the stored information.

Hence, an efficient mechanism is provided for requesting notification of future events by a service application, thereby enabling monitoring applications, etc.

When the execution modules comprise computer-readable scripts, and the predetermined order of processing the execution rules is determined by the order of execution rules in said scripts, a simple mechanism is provided for controlling the order of service execution and the order of notification regarding future events by an administrator of a rule module.

Preferably, the cascaded order of services is determined by the order of execution rules within a rule module and the order of rule modules.

When the execution rules are adapted to be dynamically updated, i.e. during operation of the service network, a real-time service management is provided.

The invention further relates to a data processing system comprising a service execution environment module adapted to invoke a plurality of services triggered by a message of a session protocol controlling a communications session;
characterised in that
the data processing system further comprises a storage medium adapted to store a plurality of execution rules each of which specifying a condition for invoking a service; and
the service execution environment module comprises a rule engine module adapted to
- retrieve a number of execution rules; and
- process the execution rules in a predetermined order, a first execution rule causing a first service to be invoked, if the message fulfils a first condition, resulting in a first modified message; and a second execution rule causing a second service to be invoked with the first modified message as an input, if the first modified message fulfils a second condition.

The invention further relates to, in a data processing system, a service execution environment module adapted to invoke a plurality of services triggered by a message of a session protocol controlling a communications session;
characterised in that
the service execution environment module comprises a rule engine module adapted to
- retrieve a number of execution rules each of which specifying a condition for invoking a service; and
- process the execution rules in a predetermined order, a first execution rule causing a first service to be invoked, if the message fulfils a first condition, resulting in a first modified message; and a second execution rule causing a second service to be invoked with the first modified message as an input, if the first modified message fulfils a second condition.

The invention further relates to software program comprising code means adapted to perform, when executed on a data processing system, the steps of the method described above and in the following.

The software program may be embodied on a computer-readable medium. The term computer-readable medium may include magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA card, etc.

The invention further relates to a method of managing the deployment of a service in a service network, the method comprising the steps of
- specifying in a computer-readable script a number of privileges and rights to be granted to the service during operation;
- analysing potential causes of feature interaction;
- specifying a deployment strategy for said service as a set of execution rules stored as a computer readable rule module script.

The invention further relates to a data record comprising a rule module for use in the method described above and in the following.

These and other aspects of the invention will be apparent from and elucidated with reference to the embodiments and with reference to the drawings, in which:
fig. 1 illustrates different types of feature interactions in a SIP service network;
fig. 2 illustrates the network elements involved in a service environment SIP server architecture according to an embodiment of the invention;
fig. 3 schematically illustrates a system architecture of a SIP server which supports a service execution rule mechanism according to an embodiment of the invention;
fig. 4 illustrates the structure of a rule module according to an embodiment of the invention;
fig. 5 illustrates the grouping of services into constrained sets of services according to an embodiment of the invention;
fig. 6 illustrates the grouping of services into constrained sets of services corresponding to locations in the round trip SIP message flow according to a preferred embodiment of the invention;
fig 7 illustrates the processing flow between services belonging to different processing points according to an embodiment of the invention;
fig. 8 illustrates the grouping of services into rule modules corresponding to administrative authority according to an embodiment of the invention;
Fig. 9 illustrates an embodiment of the invention where services are grouped both according to processing points and according to administrative authority;
fig. 10 illustrates the processing mechanism of the embodiment of fig. 9 in the case of multiple rule modules and multiple processing points;
fig. 11 illustrates another example of the processing rules described in connection with fig. 9;
fig. 12 illustrates a hierarchical rule module processing according to a preferred embodiment of the invention;
fig. 13 shows an example of the flow of SIP message event contexts and instruction sets according to an embodiment of the invention;
fig. 14 illustrates a mechanism for managing multiple instruction sets according to a preferred embodiment of the invention;
fig. 15 illustrates a tree of cascaded chains of service applications according to an embodiment of the invention;
fig. 16 shows the software components of a service support environment according to an embodiment of the invention;
fig. 17 shows steps performed by the service interaction module between the processing of the rule module and the processing of the service application in the embodiment of fig. 16;
fig. 18 illustrates the tree structure of the processing of rule modules according to an embodiment of the invention;
fig. 19 illustrates the recursive processing of rule modules in a situation where service applications generate new event contexts according to an embodiment of the invention; and
fig. 20 illustrates a mechanism of enforcing access control in connection with rule modules according to an embodiment of the invention.

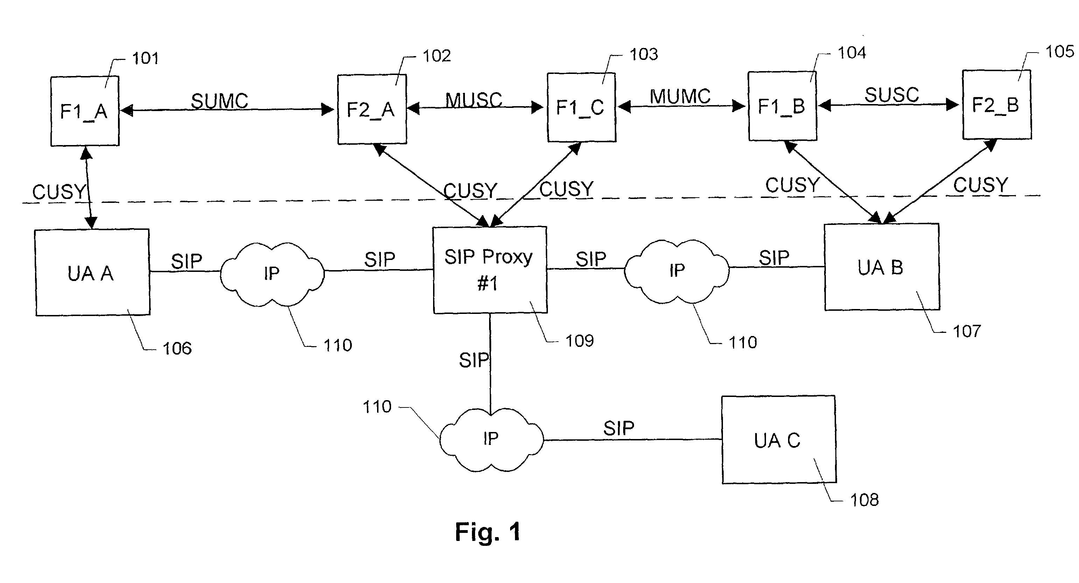

Fig. 1 illustrates different types of feature interactions in a SIP service network. With the introduction of SIP, a new range of conversational and real time services is emerging on the Internet. These services 101-105 may be managed by end user terminals 106-108, also called user agents, or on one or multiple intermediate network servers 109. Intermediate servers 109 may provide value-added services 102-103 to originating and/or terminating user agents, but also to the associated media client and server application(s). These intermediate servers can be proxy servers, redirect servers, dedicated application servers or even user agents.

Communications messages sent between the user agents are routed by the intermediate server 109 via the Internet 110 or another communications network. A fundamental problem managed by an intermediate SIP server 109 is to fulfil the user's service level expectations, to maintain good network performance and to allow flexible and scaleable definition of new services. Since performance is a key issue, the architecture should allow for some services to execute on the SIP server. Since it may not be feasible or possible to execute certain services on the SIP server, the architecture should allow for services to be executed on remote servers as well.

There is a need for flexibility of service definition, because the functionality of the SIP server should not be defined in advance. In particular, services may be continuously uploaded/registered from a range of sources including service providers and subscribers.

The owner of the SIP Server may, at the same time, be the SIP server provider, administrator and subscription provider. This stakeholder will be referred to as a network operator; it may be a kind of Telco or ISP. The network operator may own the domain name of the SIP server and provide service features to 3rd party service providers. The network operator installs service applications and rule modules on the SIP server, and offers services to subscribers. In this case the network operator acts as a service provider and service administrator. A subscriber has a contractual relationship with the network operator, in order to have a subscription, and to receive the subscriber services, offered by the SIP server. The subscriber may have a service that allows the subscriber to upload service applications and rule modules to the SIP Server. The subscriber owns these services for private use, i.e. personalized services. For simplicity all parties other than the network operator(s) and the subscribers will be referred to as 3rd party service providers which have a contractual relationship with the network operator.

Network server owners, network server providers, network server administrators, 3rd party service providers and subscribers are looking at the intermediate SIP servers as a potential platform for deploying services that cannot or should not be deployed in end-point user agents, for one reason or another.

There is a range of standardized protocols (e.g. SIP, SDP, SOAP), languages (e.g. CPL) and interfaces (e.g. SIP-CGI, 3GPP OSA API) that handle different aspects of service control. Also, services are likely to apply their control across multiple protocols, network components, languages and interfaces. The SIP server should be extensible to support all these aspects as required. These service applications may be owned by different parties, which have different authorization levels and different contractual relationships with the owner of the SIP server. The service applications may add value to the default processing of SIP requests and responses (but are not limited to doing so) at different specified call/session processing points, under different conditions, etc.

The following example illustrates that it is likely that multiple services may be invoked based on one SIP event. Consider an example where a subscriber, say Bob, has a SIP subscription with some SIP provider, say Telco. Bob has a range of services he would like to be placed in the network. Services like terminal independent services or services that become tailored to whatever terminal Bob is currently using. There may also be services that provide Bob with security, privacy and reliability. Also, Bob does not wish to manage his own services. Assume further that Bob works at a company, say Corp. The services that are invoked to manage an incoming INVITE message to Bob, may look like this:

The Telco may own and administrate the SIP server. The Telco also provides SIP services to subscribers, and hosts 3rd parties services. The Telco recognizes that Bob is a subscriber on incoming INVITE. The first service is a Telco Call Barring application, to check if Bob has paid his last bill. The second service is a service provided by the Telco. It simply checks that the Caller's media codecs can be handled by Bob's current location/terminal. If not the application will invite a media stream converter into the media stream flow (using 3rd party call control). This conversion is transparent for Bob, and the application will monitor for responses from Bob, and update the session descriptions as needed. The third service is Bob's own callee preferences, e.g. a CPL script. This application monitors for responses for the proxied request, and possibly routes the INVITE to multiple destinations based on that. Say the INVITE is to Bob's current private SIP URL. On "no response" the INVITE is proxied to his wife Alice. In some cases Bob wants all private calls to be diverted to his corporate SIP URL. The fourth service is also a Telco service, but provided to the Telco from a 3rd party application service provider, say besafe.com. This service checks for message body content types and provides virus checking when needed, e.g. if there is an animated vCard included. The fifth service is an ISP service that offers the callee multimedia advertising in return of reimbursement of the Telco's charging. If the session is established and, if it is a video- conference session, Bob receives a small streaming bar of information in the bottom of the video image. This service is a monitoring application and uses 3rd party call control. The ISP has an account on the Telco SIP server and can offer services directly to the subscriber base owned by the Telco. Bob has subscribed to this service directly with the ISP, without involving the Telco. The sixth service is a service managed by the company where Bob works. If the call is to Bob's current corporate SIP URL then the call is routed to Bob, based on data only known within the Corp's private LAN network. The last and seventh service is for administration purposes, as the Telco might want to do some logging.

The above example illustrates the diversity of contractual relationships associated with the different services triggered by an event. The services may be owned by different stakeholders, and implemented using different technologies.

Different services deployed in a service network may interact with each other. These interactions may be between services related to a single user, multiple users, or between customer services and system services. The interaction may further be between services running on the same network component or on different network component. In fig. 1, different types of interactions are illustrated: single user - multiple component (SUMC), customer - system (CUSY), multiple user - single component (MUSC), multiple user - multiple component (MUMC), and single user - multiple component (SUMC) interactions.

There are many causes of feature interaction, including "violation of feature privileges" and "violation of feature assumptions":

Violation of feature privileges: Privileges of features are broken, if features are invoked redundantly or by unauthorized parties. The main problem caused by violating feature privileges is redundant consumption of resources, or unauthorized access to resources. This may be unintended or malicious in nature. When violation of feature privileges occurs, there is a fight between features, authorized or non-authorized, for access to the resources. If features are invoked redundantly or by unauthorized parties, they may subsequently be the cause for violation of feature assumptions. Clearly, avoidance of violation of feature privileges is desirable.

As will be described below, according to the invention, violations of feature privileges are resolved by filtering on context, on contractual relationships, on conditions, on access control lists, privileges and rights.

Filtering on context relates to the need for interpreting an event in a certain context. This necessity becomes apparent when managing networked multimedia services that operate in a converged network.

Filtering on contractual relationships relates to the need for mapping an event to a set of features which are contractually obliged to process that event. This issue is particularly important in a de-regulated market where not only the provider of the network infrastructure and session control services can offer value added services to subscribers, but where 3rd parties have a legal right to make that offering as well.

Filtering on access control policies ensures that an event only causes authorized behaviour at the node.

Filtering on conditions ensures that a feature is not invoked redundantly when an event occurs and features to be invoked are detected based on the context, on contractual relationships and access privileges. These conditions may depend on e.g. the properties of the event, system properties or network properties.

Violation of feature assumptions: Assumptions about feature behaviour are broken, if the context of a feature is changed by another feature in such a way that the feature cannot work as intended. A violation of feature assumptions may cause ambiguous or conflicting behaviour.

Features are the visible behaviour of executing a service application. An instruction issued by the service application issues to control the value-added behaviour of the SIP node is termed a feature instruction. However, many features may apply their behaviour to a message before the controlling instruction is sent back to the SIP node. The controlling instruction or instruction set that is sent back to the SIP node is termed a service control instruction. It contains a resulting event context, i.e. the properties of a SIP message that has to be sent upstream or downstream in response to the original event context that triggered the service applications. Ambiguous behaviour occurs, when the service control instruction is different depending on the sequence in which the features gain control over the current event context. Ambiguous instructions are not necessarily mutually exclusive.

As an example, let a SIP message body contain a color picture in gif format. Define S1 to be a service application that is triggered on message body content of gif format. Let S1 be a service application that converts the gif format into a jpg format. Furthermore, define S2 to be a service application that also is triggered on message body content of gif format. Let S2 be a service application that converts the gif picture into a black and white picture.

Let S1 be the first application to be invoked, triggered by the gif content. S1 will convert the gif picture to a jpg picture and write it to the current event context. S2 will never be invoked. The resulting event context will contain a color jpg picture.

Now let S2 be the first application to be invoked, triggered by the gif content. S2 will convert the color gif picture into a black and white picture and write it to the current event context. S1 will, subsequently, be invoked based on the gif content as specified by the current event context. S1 will convert the gif picture to a jpg picture and write it to the current event context. The resulting event context will contain a black and white jpg picture.

Clearly, S1 and S2 provide ambiguous behaviour, because the context of one feature is changed by the other.

Conflicting feature instructions are instructions that are mutually exclusive. Conflicting instructions will try to override each other. In this case conflicting instructions are typically also the cause of ambiguous behaviour.

Furthermore, all feature instructions are potential unauthorized instruction sets, unless they are explicitly authorized. Un-authorized feature instructions can have a malicious nature or be the result of a buggy service application. In any case they can do damage to the safety and integrity of the system and should be detected.

Monitoring service applications may cause additional problems to those already discussed. Monitoring service applications may issue asynchronous feature instructions towards the SIP node at any time, as they are running continuously. As they are monitoring for future events, they may process on these events and provide more feature instructions. If there are multiple simultaneous monitoring service applications, their generated feature instructions may depend on the order in which they are notified about the event. This adds to the complexity of the previously discussed problems.

The detection and resolution of violations of feature assumptions is much more complicated than the resolution of violations of feature privileges. As will be described below, according to the invention, means are provided to specify how to resolve ambiguous behaviour, means to divide the feature interaction management in independent feature groups and administration domains, and a simple default rule to resolve feature interaction interference detected at run-time. Violations of feature assumptions are resolved by feature ordering based on the cascaded chain principle and conditional triggering, and feature priorities based on the lock/unlock mechanism. This will be described in more detail below.

Other causes of feature interaction include, limitations of network support, e.g. limited protocol functionality or limited user interfaces, intrinsic problems in distributed systems, such as resource contention, feature co-ordination, timing, or non-atomic operations, violation of system security, fraudulent, tampered or eavesdropped messages, non-cooperative interactions by features with conflicting interests, etc.

In general three different types of solutions to feature interaction problems may be distinguished:
Infrastructure: The development of infrastructures for the deployment of features which integrate feature interaction management, i.e. which deal with the causes of some defined feature interactions. Feature interactions are managed both before (specification) and after (enforcement) feature deployment time, i.e. during specification or by enforcement of rule based policies, etc. According to the invention, the rule module scripts compose an infrastructure for deploying features which provides a framework for feature interaction management.
Service creation: The design of features with regard to causes of feature interactions, i.e. the detection of feature interactions during the design phase. This, feature interactions may be managed before feature deployment, e.g. via explicitness, feature interaction cause analysis, verification test, etc. According to the invention, requirements are imposed on the service creation and feature deployment strategy specification.
Run-time: The resolution of feature interactions as they occur. As not all feature interactions may be identified before feature deployment, they have to be detected at run-time, e.g. by cryptographic authentication, authorization and secrecy, rule based policies, resolution algorithms, AI negotiation, etc. According to the invention, simple rules are provided for how feature interactions detected at run-time are resolved. These rules include the checking of access control lists associated with rule modules, the resolution of access violations by alarm notification and taking violating rule modules out of operation, the checking of scripts specifying privileges and rights, and the resolution of violations of privileges and rights by alarm notification and taking violating features out of operation.

The general management process according to the invention includes the following steps:
1. Feature design specification, independently of other features: A service is designed and specified without considering interactions with other features. However, according to an embodiment of the invention, the service is designed with respect to the processing points model described below.
2. Contract negotiation: The party wishing to deploy a service in the service network negotiates with the administrator of the service network which privileges and rights may be granted to the service. According to an embodiment of the invention, a privileges and rights script associated to the service is created.
3. Feature interaction analysis: The possible feature interactions are investigated based on experience and possibly knowledge about some of the features deployed in the service network.
4. Feature deployment strategy specification: The author of a rule module which is to deploy the service acquires an administrative domain. Based on the feature interaction analysis and knowledge about the service, subscribers and users, the feature deployment strategy is specified in a rule module script.
5. Feature implementation.
6. Verification test.
7. Feature installation and activation.
8. Feature run-time behaviour and management.
9. Feature de-activation and de-installation.

According to the invention, a framework for feature interaction management is provided which
- allows for the analysis stage to be easily mapped to specification rules by providing a simple language and framework with easily understood principles,
- defines clear boundaries between the groupings of features which are known to a given analysis entity and those which are not,
- provides simple and thus easily understandable rules for the handover of control between these groups of features. When handing over from one group of features to another there is a mechanism for ensuring that a subsequent group of features does not compromise the previous group, and
- simplifies the analysis stage by specifying processing points in the processing of events at which there are guaranteed pre-conditions and at which applications are only allowed to give certain instructions to the server.

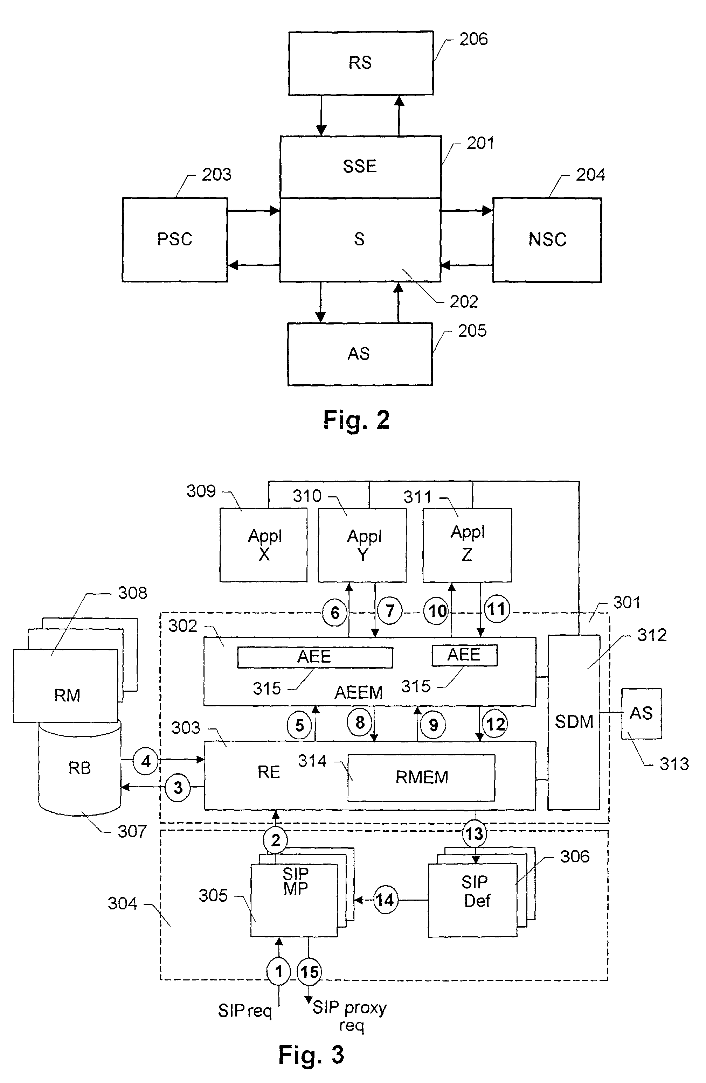

Fig. 2 illustrates the network elements involved in a service environment SIP server architecture according to an embodiment of the invention. The previous sip client 203 represents any client, such as a SIP enabled PC, a wireless terminal, a previous hop proxy, a SIP/PSTN gateway etc. The client makes requests for session services with incoming requests to the SIP server 202. The SIP server 202 represents the proxy, redirect or dedicated SIP enabled application server where the service support environment 201 is implemented. Alternatively, it may be any other SIP enabled entity that triggers value added services, such as a user agent, registrar, or the like. Services located in the SIP server service support environment 201 are defined by service applications, such as SIP-CGI scripts, rule modules and service features. The SIP Node 202 may hand over control to the service support environment 201 on reception of an event. The service support environment 201 can subsequently invoke a relevant service application according to certain filter criteria and based on that event. The service application returns a feature instruction or a set of instructions. The service support environment 201 hands back control to the SIP node 202, together with service control instructions that informs the SIP node 202 about how to process the event. The SIP node forwards the request to the next SIP client 204. Responses to the request will be routed in the opposite direction from the next SIP client 204 via the SIP node 202 to the previous SIP client 203, possibly triggering additional services. The next sip server 204 represents any server, e.g. a SIP enabled PC, a wireless terminal, a next hop proxy, a SIP/PSTN gateway etc. The server handles incoming requests. The remote server 206 offers remote service execution, e.g. in another service support environment. Based on e.g. performance criteria the service support environment 201 may initiate processing on the remote server 206, e.g. by use of request/response protocols. In this way different categories of services may be invoked and managed on different hosts. The protocol used towards the remote server may be any protocol supporting request/response dialogs, e.g. SIP, ICAP, HTTP, OSA API, etc. The administration server 205 performs administrative tasks on the service environment. It is responsible for configuring the service support environment 201, which is associated to the domain of the SIP Node 202. Hence the environment of the service support environment 201 includes a SIP node, service applications, remote hosts and an administration entity.

Fig. 3 schematically illustrates a system architecture of a SIP server which supports a service execution rule mechanism according to an embodiment of the invention. The service support environment 301 enforces the deployment infrastructure, i.e. how one feature interacts with another. Hence, the service support environment 301 provides the functionality in the SIP server that supports value-added services. The service support environment 301 comprises a rule engine 303 for managing the rule modules 308 stored in an execution rule base 307. The rule engine 303 further comprises a rule module execution module 314 responsible for processing rule modules. The rule engine can invoke services 309-311 via the service execution engine manager 302. The service definition manager 312 provides functionality for the administration of the rule modules. The SIP server further implements a SIP protocol stack 304 including the SIP default functionality 306 and a SIP message parser 305. The message parser 305 supports the SIP protocol and extracts message properties that can be interpreted by the rule engine 303. The administration server 313 performs administrative tasks on the service environment.

An important mechanism for implementing service deployment policies according to the invention is the specification of deployment rules as service execution rules specified in rule modules. Service execution rules specify conditions and actions that need to be taken, if the conditions are fulfilled. According to the invention, a programming language for specifying these rules is defined which will be referred to as Service Execution Rule Language (SERL).

The rule modules 308 are managed and executed by the rule engine 303. The rule engine 303 is the main functional entity that implements the triggering and feature interaction mechanism, and is part of the service support environment 301. When an event occurs, the message parser invokes the rule engine 303 and hands over the event to the rule engine 303. The rule engine 303 finds and loads the relevant rule modules 308 and processes those that are relevant to the received event in the correct order. The filtering includes a detection of contractual obligations. The events define the context in which rule modules are processed, i.e. the conditions are evaluated according to the properties of the SIP message events. The rule engine 303 invokes the corresponding actions when the rule pattern matches the given message properties. Based on the content of these actions, the rule engine 303 may issue invocation instructions to the application execution engine manager 302 or another appropriate entity within the service support system. SERL scripts do not have knowledge about the services that they invoke and manage, other than the knowledge about how to invoke them and manage features in general. The controlling instructions received from the invoked service applications are mediated back to the SIP stack 304 when the last rule module has been processed.

The rule engine 303 further manages the information which is sent between different services. When an event occurs, an event context is established containing the relevant properties of the event in a standardized way. The message properties have a name and a value. The value may be determined by the message. Examples of SIP message properties are
Name: sipRequest.Request-URI, Value: sip:bob@corp.com
Name: sipRequest.To, Value: Bob Smith <sip:bob@corp.com>
Name: sipResponse.Status-Code, Value: 301

An example of a SDP message property is:
Name: sdp.m, Value: video 48232 RTP/AVP 0

The rule engine 303 supports a number of internal APIs that can be accessed by the interfacing functional entities. These APIs include
- a message notification API used by the SIP stack 304 for message notification from the message parser 305 to the rule engine 303,
- a rule base definition API, used by the service definition manager 312,
- a service instruction API used by the application execution engine manager 302 to hand over instructions to the rule engine 303 on behalf of the service applications 309-311, and
- an arming API used by the application execution engine manager 302 to request the arming of triggers and transaction events on behalf of the service applications 309-311.

The application execution engine manager 302 embeds and manages a number of application execution engines 315 for different types of service applications, e.g. a OSA engine, a CPL engine, CPL interpreter, a CGI engine and/or a Servlet engine. It supports the interface induced by the rule engine 303 and maps between the application API and the rule engine API. From the viewpoint of the rule engine 303 all application execution engines 315 look like a single entity, i.e. the application execution engines manager 302. The service definition manager 312 may provide further functionality to the application execution engines 315.

The APIs provided by the application execution engines manager 302 include:
- an invocation API used by the rule engine 303 for invocation instructions from the rule engine to the application execution engine manager 302, and
- a notification API used by the rule engine 303 for notification instructions from the rule engine to the application execution engine manager 302.

The default SIP server behaviour 306 comprises the functionality of a proxy server, redirect server, application server or even a user agent. It may further include Registrar or IM&P functions. It provides an interface which can be accessed by the rule engine 303 to place instructions. Alternatively, a service application may implement the SIP server behaviour. Therefore, it is possible for the rule engine to invoke only parts of each of the above functions as required by the service applications.

The service definition manager 312 provides an O&M API used by the administration server 313, service applications 309-311, and the SIP stack 304. The API provides functionality for
- Manual authentication and authorization of new rule modules and service applications.
- Manual configuring of rights and privileges of rule modules and service applications.
- Manual loading of rule modules and service applications.
- Manual activation/deactivation of rule modules and service applications.
- Manual validation of rule modules.
- Manual validation of service applications implemented using script languages.
- Manual deletion of rule modules and service applications
- Manual listing of all rule modules and service applications together with their status.
- Manual modification of rule modules.

The service definition manager 312 may further provide an interface supporting an automatic handling of some of the above manual functions and/or additional features, such as listing available service features, getting interface and/or version of a service feature, listing supported execution engines and script languages, such as JVM, CPL, Perl, etc., installation/un-installation of service features, activation/deactivation of service features, registering of service application that will provide services as service features to other service application, subscription to service features, invoking/terminating of service features, statistic operations like "monitor processor load", "busy hour calls", accounting operations, activation/deactivation, reading, resetting of accounting records, etc.

Here, the term service features comprises functions which are offered to service applications. The service features are considered as being integrated into the service support environment 301 and SIP stack 304. The application execution engine manager 302 and the service definition manager 312 both provide service features to the service applications 309-311. Although some of the features offered by the application execution engine manager 302 are mediated through the rule engine 303 and the SIP stack 304.

The service applications 309-311 are programs, compiled or interpreted, executing in the service support environment 301 of the SIP server, or on a remote server. Their purpose may be related or unrelated to the basic functions of the SIP sever. Service applications may implement SIP server behaviour. Service applications may offer services to other service applications, i.e. they may be service features. For example, a service application may contain some MIME type converter, and offer it as a service feature to other service applications. Other service applications may then use this function in order to perform a service. Preferably, service applications should be portable between SIP servers and may be executed on remote servers. Service applications may access, or may be accessed through global or local naming convention, a standardized or local namespace, by using specified file paths to the applications, etc., open and standardized API, e.g. SIP-CGI, OSA API, HTTP, ICAP, CPL, servlets, etc.

A standardised mechanism of accessing service application is an advantage for 3rd party service providers.

The SIP Server does not necessarily manage remotely placed service applications, as it may have no knowledge about them. In this case, the SIP server or the application execution engine manager 302 may require location information provided by the triggering information.

The message parser 305 is responsible for interpreting messages received, isolating well-defined elements as message properties, and causing actions to be activated when appropriate. When an event occurs, an message object is established containing the relevant properties isolated by the message parser 305.

Preferably, any supported protocol has a corresponding message parser. A parser may contain subordinate parsers that correspond to subordinate protocols, i.e. embedded in other protocols like SIP. For example, within a SIP message parser there may be separate parsers for handling different media types such as SDP, HTML, XML, and XHTML. From the standpoint of the rule engine, all parsers look like a single engine. The API for message parser should preferably be defined such that parsers for new protocols and content can be added modularly.

For any protocol to be supported by the service support environment 301, the interface between the message parser of that protocol and the rule engine covers
- the set of properties defined by the message parser, including the property name, its relationship to the message it characterizes, and the ability of an action to modify it, and
- the processing points at which rules can be activated.

In one embodiment of the invention, the service support environment 301 or each of the functional entities within the service support environment may be placed at separate hosts serving multiple servers, e.g SIP, Web, WAP, I-Mode, RTSP servers, and accessing multiple application servers, e.g. databases, OSA, Web, SIP, etc.

For example the rule engine 303, the application execution engine manager 302 and the service definition manager 312 may be located at each their host, possibly interfacing via IP. The interfaces between the rule engine and the various servers may be standardized or proprietary. The interfaces between the rule engine, the application execution engine manager and the service definition manager should, preferably, be proprietary and packaged together. The interfaces between the service application servers and the service support environment are preferably standardized, like OSA API, HTTP, SIP or some database API like some SQL based API. In such a distributed configuration the a further advantage of the invention becomes apparent, as the rule engine is able to manage many types of events, not only SIP events, but also HTTP events, SMTP events, Wap events, Media codec events like MPEG7 events or 3D virtual reality or gaming object events, etc.

Still referring to fig. 3, the trigger mechanism according to an embodiment of the invention may be illustrated by a simple example where it is assumed that only a single rule module is relevant for a received event. In figure 3, the numerals in circles refer to the following steps of a trigger example:
1. A SIP request is received at the message parser 305.
2. The SIP message parser 305 generates a SIP message object. The rule engine 303 converts this into a SIP event context.
3. The relevant rule modules 308 are located in the execution rule base 307 based on the event context, processing points and contractual relationships. An embodiment of this mechanism will be described below.
4. The rule engine 303 loads the found rule module 308 from the execution rule base 307 into the rule module execution engine 314, and executes it. As an example, let the loaded rule module contain the following functionality, i.e. a rule specifying trigger criteria and invocation actions for service applications 310 and 311: 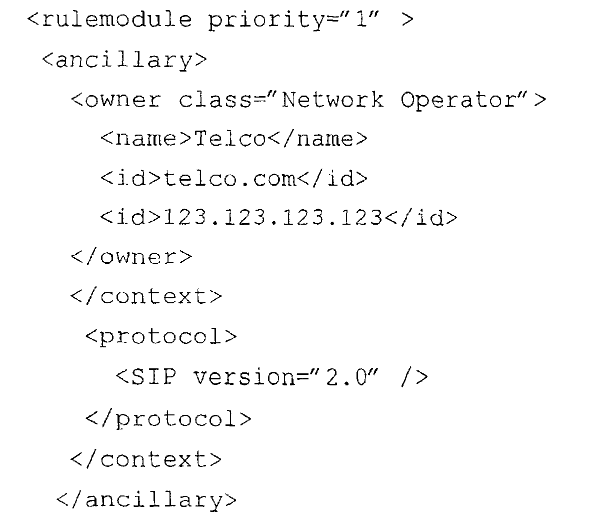 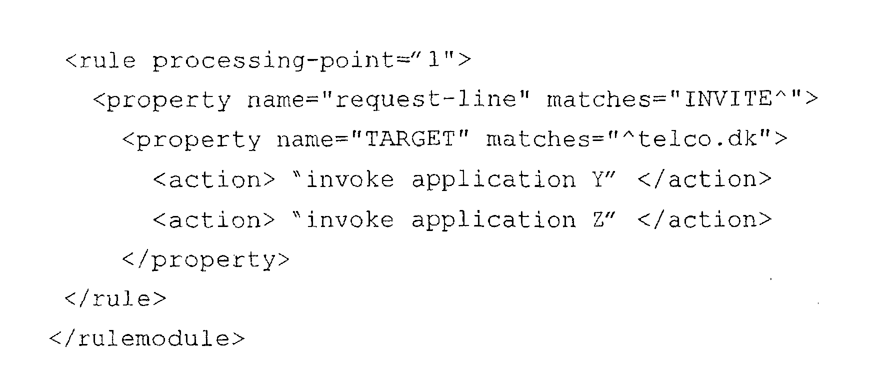
5. A trigger is reached, and the specified service application Y (310) is invoked by sending an invocation command to the application execution engine manager 302.
6. The application execution engine manager 302 locates the application Y (310).
7. The application execution engine manager 302 loads the relevant service application Y (310) into an application execution engine 315 and, subsequently, activates it for execution.
8. The resulting instruction from application 310 is handed back to the rule engine 303.
9. The rule engine 303 resumes processing the rule module, and triggers another application Z (311). An invocation command is given to the application execution engine manager 302.
10. The application execution engine manager 302 locates the application Z (311).
11. The application execution engine manager 302 loads the relevant service application Z (311) into an execution engine 315 that can run the application and, subsequently, activates it.
12. The resulting instruction from application 311 is handed back to the rule engine 303.
13. The rule engine 303 resumes processing the rule module, and finds out that the rule module has no more rules to execute, and that there are no more rule modules to load. Subsequently, the rule engine 303 sends the final result of the services to the SIP default behaviour 306.
14. The SIP default behaviour 306 merges the output from the rule engine 303 with possible default output and sends the SIP message to the message parser/converter 305.
15. The SIP Message is e.g. proxied.

In the case of multiple rule modules, the above steps 13-14 may alternatively be as follows
13. The rule engine 303 resumes processing the rule module, and finds out that the rule module has no more rules to execute. The rule engine 303 searches for rule modules with lower order priority than the previous executed rule module.
14. Go to point 3 in the previous example. If a rule module is found it will be run as in previous example, possibly invoking other applications, e.g. the application 309 will be invoked.

When no rule modules or services are installed to control a session, the rule engine 303 hands over control to the SIP server, and specifies an empty output. The SIP server may possibly merge the empty output with the default behaviour 306 of the server as in SIP-CGI, according to default SIP behaviour for Registrars, Redirect Server and Proxy Server.

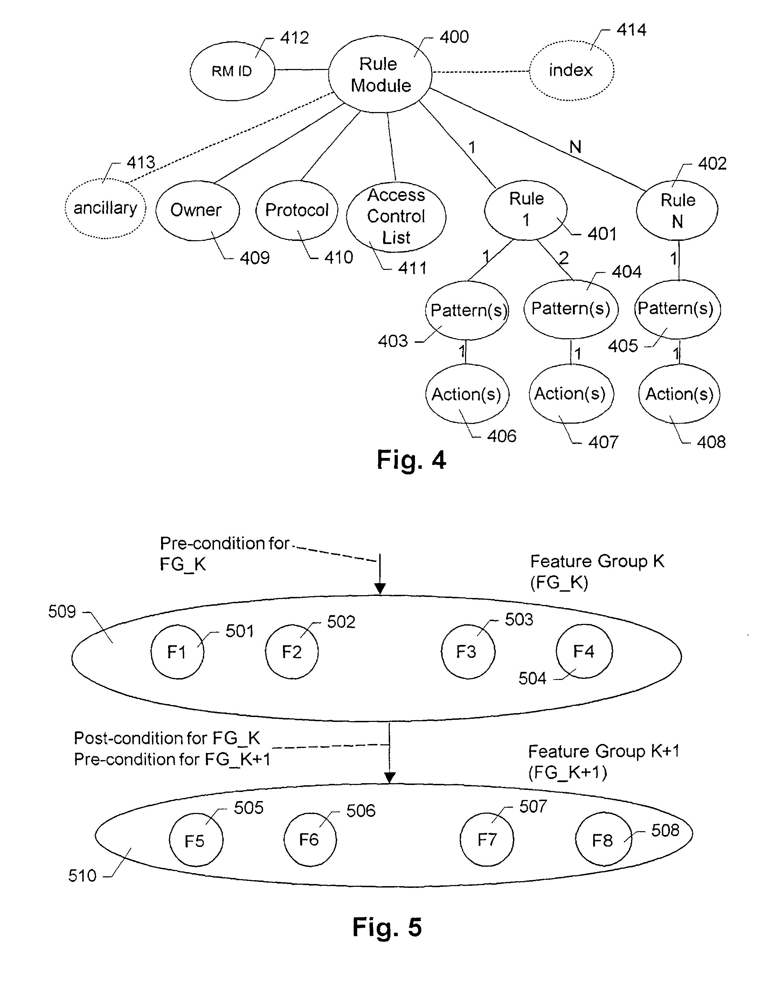

Fig. 4 illustrates the structure of a rule module according to an embodiment of the invention. According to the invention, a rule module 401 is conceptually a tree comprising a number of service execution rules 401-402, each rule specifying a number of conditions 403-404 and 405, respectively, and a number of actions 406-407 and 408, respectively, that need to be taken if the corresponding conditions are fulfilled. In the following, conditions will also be referred to as patterns. At a high level a rule module further comprises
- owner information 409 specifying the owner of the rule module, i.e. an identifiable party with an interest in the SIP node. This party may own multiple rule modules. The owner information may further include information about contractual relationships.
- protocol information 410 specifying the context in which to interpret the rules in the rule module. Examples of protocols are SIP, SDP, HTTP, H.323, etc. Preferably, there should only be a single protocol defined per rule module. Otherwise some overlap may provide ambiguous interpretation. For example, both SIP and HTTP have content type header fields.
- access control information 411 specifying which parties have the right to invoke, administer and read the rule module,
- a rule module identifier 412, preferably a unique identifier. Additionally, a rule module may include a number of aliases.

A rule module may further comprise ancillary information 413 providing further context information for a rule module and index information 414.

A pattern 403-405 is an expression that can be evaluated with respect to the message properties in an event context, and either the rules will match or fail to match the properties in the context. Actions 506-408 may identify applications, built-in service features, remote servers, load sharing hosts, or next hop sip servers to be invoked. They may further identify downloaded and externally placed action objects, etc. Rules, conditions and actions may have parameters that describe their behaviour, they are the attributes of the tree nodes. The branches have a weighting indicating which branch should be processed first.

Preferably, every rule module has an explicit ordering priority assigned to it, i.e. the order priority specifies the sequence in which rule modules are loaded by the rule engine.

According to a preferred embodiment of the invention, the nodes of the tree in the graphical representation are represented by XML elements. The branching from one node to the next nodes is represented by enclosing the element representing the next node(s) within the element representing the node branched from. The weighting of the branches is given by the order in which they are represented in the script. This weighting gives the order in which to process the elements when an event is received. In other words, the script is executed from top to bottom. Thus, in this embodiment, there are no loops within a SERL script. Preferably, the format of a rule module is specified as an XML DTD or XML schema.

It is an advantage of this embodiment, that it is based on a standardized and extensible language to specify languages.

In one embodiment of the invention, policies can be associated with rules specifying privileges and rights. Each node of the rule module may have an associated Policy node, which may contain access control lists.

The following is an example of an instance of a rule module specified as a SERL script:

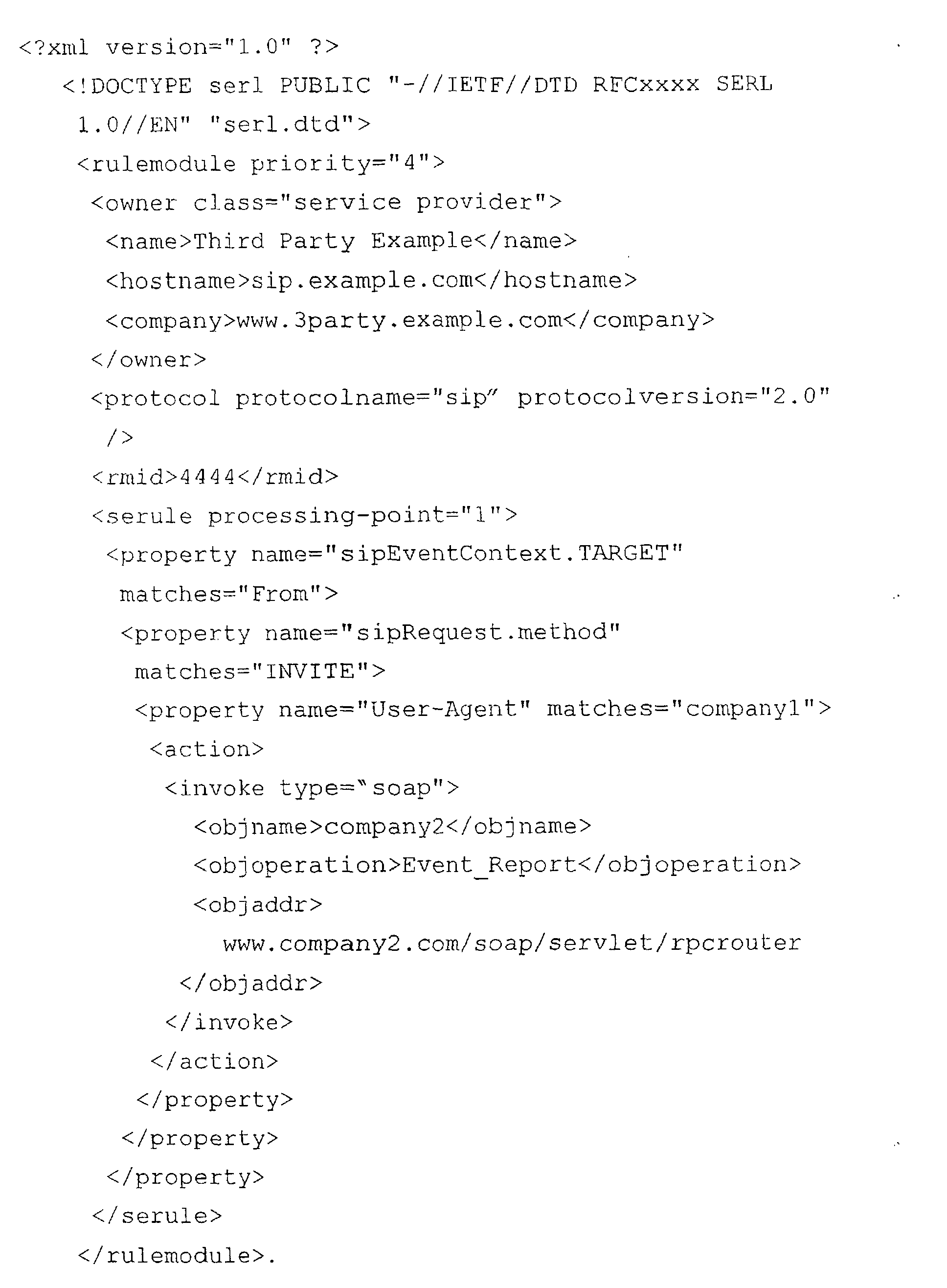

Fig. 5 illustrates the grouping of services into constrained sets of services according to an embodiment of the invention. According to this embodiment, services 501-508 are grouped into a set of feature groups 509-510. In the example shown in fig. 5, feature group 509 contains features 501-504 and feature group 510 contains features 505-508. For each feature group, certain constraints are imposed on the services of that group, i.e. they are only allowed to issued well-defined types of instructions. The feature groups do not specify how single features are allowed to interact within a feature group, as long as they do not violate the constrains on the group behaviour. The feature groups are sequentially ordered, e.g. by enumerating the feature groups. In the example of fig. 5, feature group 509 is the K-th feature group in a sequence of feature groups and feature group 510 is enumerated by K+1. The ordering of feature groups imposes an order of execution, such that the features of feature group 509 are executed prior to the execution of the features in group 510. Preferably, the definition of a feature group comprises a specification of the group ordering, e.g. by specifying a group index, by specifying a previous and a next feature group, or the like. Preferably, the definition of a feature group further comprises a specification of pre-conditions, i.e. conditions on which the features of that feature group may rely, and a specification of constraints enforced on the behaviour of the services of that feature group. Hence, the feature groups are an ordering mechanism formalizing a fundamental type of feature interaction by providing an ordered sequence in which service applications are invoked. Therefore, this mechanism provides a framework for grouping the problem of feature interaction into constrained sets of features. The mechanism actually solves feature interactions between these feature groups, because, due to the constraints on the feature groups, the feature assumptions when handing over control from one group to the next, is deterministic and well-defined. It is an advantage of this grouping that it provides a mechanism for decomposing the problem of feature interaction analysis into smaller, independent problems, thereby making the problem easier to manage. Furthermore, it is an advantage that formalized problem areas may be delegated to independent parties, making the problem more scalable. The mechanism of feature groups gives the administrator and service provider the ability to categorize the service applications to different points in processing time, where the service applications should be invoked.

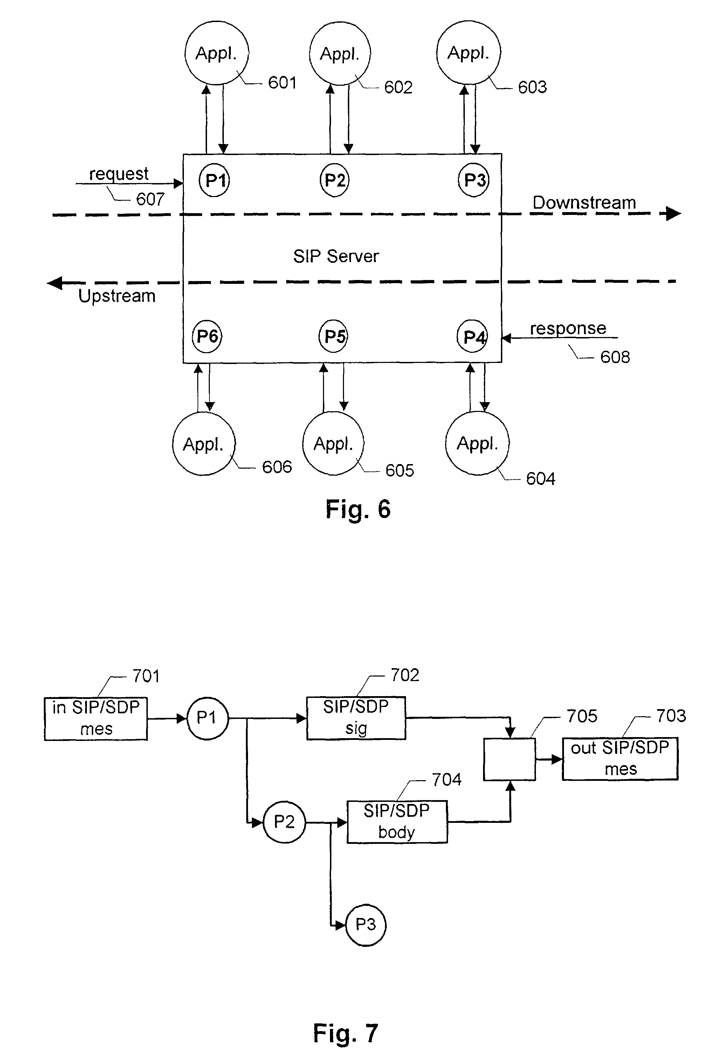

Fig. 6 illustrates the grouping of services into constrained sets of services corresponding to locations in the round trip SIP message flow according to a preferred embodiment of the invention. According to this embodiment, the feature groups are related to locations P1-P6 in the logical request/response round trip message flow which have certain pre-conditions guaranteed for the event context, and where a service application can be invoked based on the constraints about which behaviour is allowed at that location. These feature groups will be referred to as processing points.

The six processing points P1-P6 are a general grouping of services. Processing points P1-P3 and P4-P6 logically cover corresponding problems. Processing points P1-P3 include services which are triggered on requests 607 and processing points P4-P6 include services which are triggered on responses 608. Logically, processing points P1 and P4, points P2 and P5, and points P3 and P6 correspond to corresponding constraints.

A SIP message can roughly be divided into two parts, the signalling properties, i.e. properties related to SIP, SDP, etc. and the message body content which is not related to signalling, such as gif, html, etc. Services invoked on a SIP event can therefore be grouped into those which:
- impact the signalling properties,
- impact the non-signalling message body content only, and
- those which neither impact the signalling properties nor the non-signalling message body content.

This gives the basic grouping of services into three groups 601-603 associated to the three processing points P1-P3, respectively. Similarly, in the response pass, the corresponding groups 604-606 are related to the processing points P4-P6, respectively.

Here, the term signalling properties comprises SIP and SDP message properties that can be matched in a rule module condition to invoke a service. Consequently, applications that change a signalling property may cause another application to be invoked, which might invoke yet another application and so fourth. The advantage in moving the handling of service applications which do not change signalling properties to a processing point after all changes to the signalling properties has occurred, is that the administrator has an easier task in ordering the applications at the processing points P2 and P5.

In one embodiment of the invention, the processing points P1-P6 may be defined as follows:
- Processing point P1 - Previous Hop Client Request: A SIP request 607 from a previous hop client has been received. For this particular request and for this particular subscriber no rule modules have been invoked at any previous processing point. This processing point comprises services which impact the SIP/SDP signalling properties of the resulting messages(s), but not the message body content.
- Processing point P2 - Request Content Point: The signalling properties of the resulting SIP/SDP message(s) have been generated and cached, i.e. this part of the SIP message is ready to be sent. Additional updates to the call/media control signalling properties should not occur, unless explicitly authorized. The services 602 invoked at processing point P2 should not impact the SIP/SDP signalling properties as generated in processing point P1. However, there may be exceptions to this rule. For example, services may impact SIP headers like Alert-Info, Call-Info, Content-Disposition, Content-Encoding, Content-Language, Content-Length, Content-Type, and Require. Special care should be taken, if these signalling properties are changed at both processing points P1 and P2. Examples of types of media content that may be processed at this processing point include SOAP, HTML, vXML, SMIL, gif, mpeg7, au, etc.
- Processing point P3 - Request Batch Point: The SIP resulting message(s) has been generated and sent. No more updates to the resulting message(s) can occur. This processing point corresponds to services 603 that just need to be invoked but do not produce and output which is needed to process the request. These services mat only read the resulting message(s), not update it.

The processing points
- P4 - Previous Hop Server Response,
- P5 - Response Content Point, and
- P6 - Response Batch Point
may be defined for response messages 608 analogously to the processing points P1-P3, respectively.

Alternatively or additionally, other processing points may be defined. For example, an additional processing point P0 (not shown) may be defined without constraints on the features and which is triggered on any event, i.e. on the reception of both requests 607 and responses 608.

Preferably, additional processing points may be associated with one of the high level processing points. For example, sub-processing points may be defined for processing point P1, which may be named P1.1, P1.2, P1.2.1, P1.2.2 etc. Preferably, new processing points should only be defined, if they define a logical group of services that may be beneficial to invoke according to specified pre-conditions.

The following table includes some examples of services which may be defined at the different processing points at a originating and terminating SIP server, respectively:

| **PP** | **services on originating server** | **services on terminating server** |
|---|---|---|
| P1 | - Originating call barring - Caller preferences-CPL call barring - MM adviser controller (reimbursement) - Privacy/secrecy enforcement - Anonymous caller | - Terminating call barring - Callee preferences/CPL routing - Outlook based routing decisions - Presence based routing decisions - Automatic instant massaging services - Media stream converter controller - Online gaming server |
| P2 | - Animated Vcard - Greetings of the day | - Virus scanner |
| P3 | - Logging | - Logging |
| P4 | - Call back service if queuing | - IVR controller - Music queue controller - NM advertiser controller - privacy/secrecy enforcement |
| P5 | - Vcard converter - Virus scanner | - Animated Vcard - Joke of the day |
| P6 | - Logging | - Logging |

Fig. 7 illustrates the processing flow between services belonging to different processing points according to an embodiment of the invention. In the embodiment described in connection with fig. 6, services that impact different parts of a SIP message are grouped into different processing points. This may be utilised in order to provide an efficient processing of services. Services which impact the SIP signalling properties of an incoming message 701 are included in processing point P1. Therefore, the output from processing point P1 comprises the final call/media control instructions 702. This can immediately be merged with possible SIP server default behaviour and handed over to the message converter 705 which prepares the outgoing SIP message 703. In addition, the services invoked at processing point P2 can rely on that the signalling properties can no longer change, e.g. they can with confidence apply services that dependent on the final generated destination address.

By concentrating services that impact the non-signalling SIP message body content only (and possibly the related content header fields) in processing point P2, the output 704 from processing point P2 is sufficient for the server to actually send the resulting outgoing SIP message(s) 703. The output 704 from processing point P2 is handed over to the message converter 705, merged with the output 702 from processing point P1, and the message 703 is sent.

When the output from processing points P1 and P2 is ready, processing point P3 is reached. The services in processing point P3 do not impact the content of the resulting SIP message 703, but may rely on it. Hence, preferably, the resulting SIP message generated from point P1 and P2 may be sent before waiting for the execution of processing point P3 services, thereby increasing the efficiency of the system.

Hence, the grouping of services according to processing points has the following advantages: Processing points simplify the problem of feature interaction. Processing points make the problem of feature interaction more scalable. Processing points improve latency of processing messages when using parallel processing, i.e. multiple processors. Responses or proxy requests can be handed back to the network faster, because service applications that do not specify instructions to the SIP Server are located in processing point P3. Hence, the response or proxy request does not need to wait for the service applications in processing point P3 to be invoked.

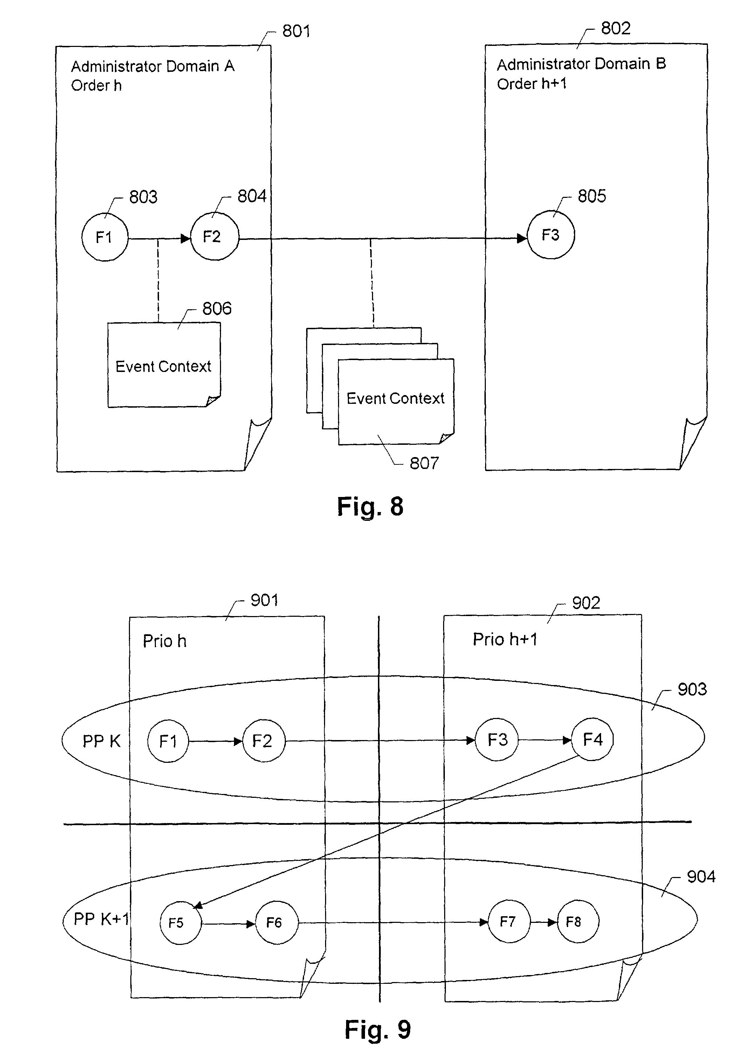

Fig. 8 illustrates the grouping of services into rule modules corresponding to administrative authority according to an embodiment of the invention. As rule modules have a rule module owner associated with it, they correspond to an administrative domain where an administrator, i.e. the rule module owner, can specify service deployment policies. Within a rule module, the order of actions is assigned by the owner of the rule module, i.e. the SERL script author.

According to this embodiment of the invention, each rule module has a priority assigned to it. The priority specifies the relationship between rule modules. The higher the rule module priority, the earlier the rules in the rule module are applied. Fig. 8 schematically shows two rule modules 801 and 802. Rule module 801 is owned by administrator A, while rule module 802 is owned by administrator B. The rule module priorities of the rule modules 801-802 are indicated by a rule module order, where a low order corresponds to a high priority and vice versa. For example, rule order 1 may be defined to be the highest priority. In the example of fig. 8, rule module 801 has a rule module order h and rule module 802 has an order h+1. Consequently the services 803-804 invoked by rule module 801 are executed before the service 805 of rule module 802.

Rule modules with the same owner may have the same ordering priority. Preferably, in that case, they should have different event contexts (e.g. SIP, HTTP, ...), thereby avoiding that more than one rule module with the same priority is invoked on the same event context. In other words rule modules that can be invoked on the same message property from a given event context should have different priorities.

Each administrative domain is independent of other administrative domains. This means that one administrative domain does not need to have knowledge of the services deployed in other domains. Each administrator is responsible for analyzing and specifying service deployment policies in one given domain.

If more than one rule module or service application is invoked at a given event, they each will provide a set of feature instructions that will specify how this event is to be processed, for example whether the event should be forwarded or terminated. Clearly such feature instructions should not be processed simultaneously, and some feature instructions may override others. However, in some cases it might not be important in which order feature instructions are applied or whether they are applied simultaneously.

According to the invention, a mechanism is provided to allow administrative domains to protect their feature instructions when handing over control to another administrative domain. This means that each administrative domain may limit the hand-over of control to properties that are unimportant to the correct behaviour of its features. The object that is passed from one service to another is the current event context 806-807. Preferably, when handing over the control of the event context 806 between service applications belonging to the same administrative domain, the default rule is that no properties of the event context is protected. If something has to be protected, it has to be done explicitly. Between administrative domains, however, all properties of an event context 807 are protected by default. If something is not necessary to protect between administrative domains, it has to be explicitly marked un-protected. Preferably, the right to mark properties protected and/or un-protected should be governed by a privilege associated with a rule module.

In other words, higher priority rule modules may lock message properties if they have the privileges to do so, and locked message properties cannot be unlocked by rule modules unless they have the privileges to do so.

The following example of a fragment of a rule module illustrates the locking/unlocking of message properties after a feature F1 has been executed:

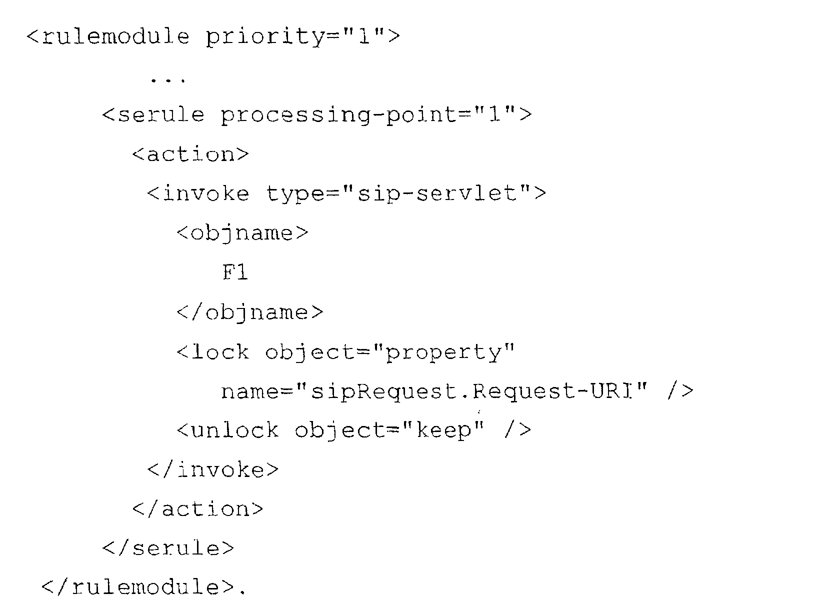

In one embodiment of the invention, an action output may terminate the rule module, i.e. the downstream applications are not invoked. Furthermore, actions may explicitly set privileges on message properties in the current event context, if they have the privileges to do so. It is an advantage of this embodiment that the administrative domains are independent once they have been assigned a priority.

According to this embodiment, an overall administrator assigns the priorities or ranges of priorities of the rule modules based on contractual relationships with each of the rule module owners. The overall domain administrator would naturally also be the owner of the highest priority rule module. For example, at the top of the hierarchy is the SIP service provider who owns the domain name and IP address of the host. The SIP service provider may provide many services to many parties. He may also run applications for his own purposes, for example logging, accounting, statistics gathering, fraud detection, advertising etc. He may place one or more rule modules on the server.

For example, the SIP service provider may place a rule module for each of his subscribers. When a SIP event was received in the SIP server the SIP service providers main rule module may invoke some of his own services and then hand over control to the rule module for the appropriate subscriber. In this rule module there may be rules to trigger services tailored for the specific subscriber. These services may be provided by the SIP service provider himself or bought-in by the SIP service provider from third party service providers. The SIP service provider would be responsible for analyzing feature interaction problems between these services and specifying order priorities and instruction priorities between the service applications, preferably by using SERL. In this case the main rule module and the subscriber rule module are both owned and administered by the SIP service provider. They are said to be in one administration domain. At some point in the order priority the SIP service provider may decide to hand over to a rule module owned by the subscriber himself. Note that individual subscribers may be able to write their own SERL scripts, or they may only able to update preferences, e.g. via a HTML form, from which a SERL script may be generated. The subscriber's rule module may invoke a CPL script, or may in turn invoke another rule module, some third party service provider's rule module, or the like. If the subscriber's rule module includes more than one action, the subscriber has to specify which action should be done first. Likewise in the third parties rule module the actions should be ordered according to the wishes of the third party.

In another scenario, the subscriber may be an employee of a corporate customer. In this case the SIP service providers rule module may first hand over to the corporate customer's rule module which might invoke some applications and then hand over to the individual subscriber's rule module.

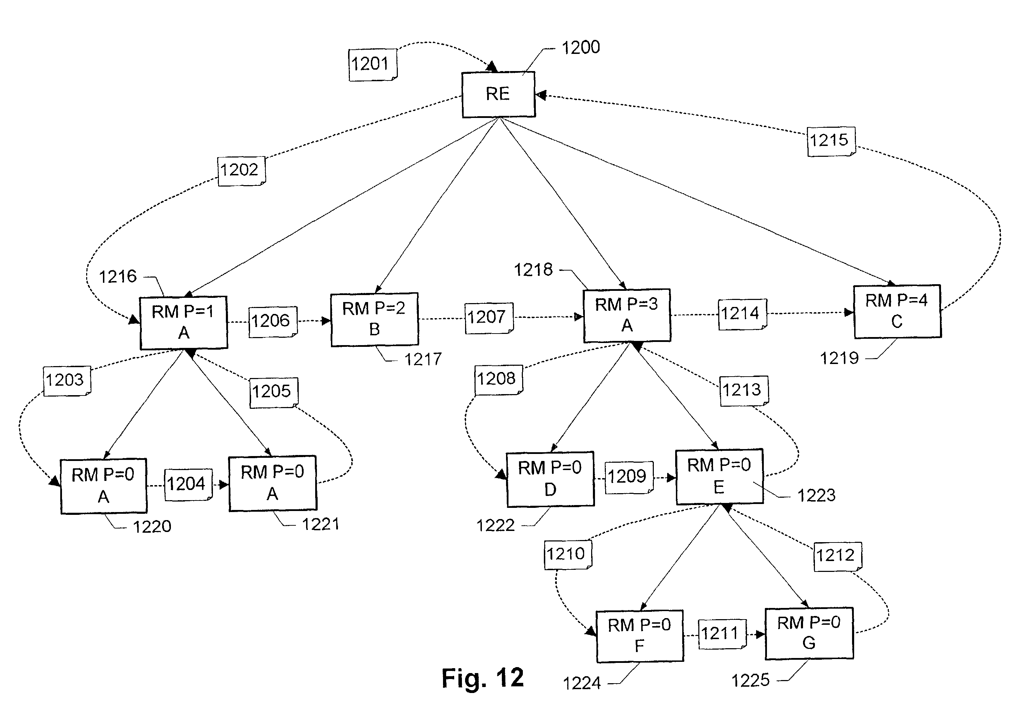

The top-level administrator may like to intersperse the priority order with a number of rule modules. However, it may be cumbersome to intersperse rule modules with lower priority rule modules of other parties. One solution to this problem is to separate rule module priorities with sufficient back-up ranges that can be used at a later time. Alternatively, a hierarchical administration domain model may be applied, as will be described in connection with fig. 12.

Preferably, the service support environment supports a mechanism for notifying administrators when an application attempts to alter a protected property. Preferably, an application that attempts to alter a protected property is taken out of service.

It is noted that modifications of the above scheme are possible. For example, in a hierarchy of administrative domains each level administrator may have complete scope to arrange rule modules at levels with lower priority, within an allocated priority range. The higher level administrator would delegate this scope.

It is an advantage of this embodiment that it provides a scalable mechanism for managing and implementing service deployment policies. According to this embodiment, the service support environment is able to host 3^{rd} party service deployment policies without considerable extra work for the domain administrator. It is a further advantage that limitations are placed on the number of stakeholders or the number of contractual relationships between them.

It is a further advantage of this embodiment that the task of feature interaction analysis is broken down into administrative domains, thereby allowing a distribution of the problem between the parties concerned.

Fig. 9 illustrates an embodiment of the invention where services are grouped both according to processing points and according to administrative authority. Fig. 9 schematically shows a rule module 901 with priority order h and a rule module 902 with priority order h+1. Rule module 901 invokes services F1, F2, F5, and F6, while rule module 902 invokes services F3, F4, F7, and F8. The services F1-F8 are further related to processing points 903 and 904. Processing point 903 includes services F1-F4, and processing point 904 includes services F5-F8. The processing points 903-904 are enumerated such that processing point 903 has the index K and processing point 904 has the index K+1, indicating that processing point 903 is processed before processing point 904.

According to this embodiment, rules are applied in sequence of the processing points. Consequently, when processing rule modules, only the service execution rules belonging to the current processing-point are executed.

For each processing point, there are sets of rule modules which are grouped according to priority and which may be invoked at that processing point. All priority 1 rule modules are grouped in set 1, all priority 2 rule modules are grouped in set 2, and so on. However, given an event context, at most one rule module is invoked in each of these sets. A rule module may be distributed over multiple processing points.

In the example of fig. 9, first the services of the processing point 903 are processed according to their rule module priority, i.e. services F1 and F2 are processed before services F3 and F4. Subsequently, the features F5 and F6 of processing point 904 and priority h are invoked before services F7 and F8.

The rule modules 901 and 902 which are schematically illustrated in fig. 9, may be expressed as indicated in the following examples of rule modules.

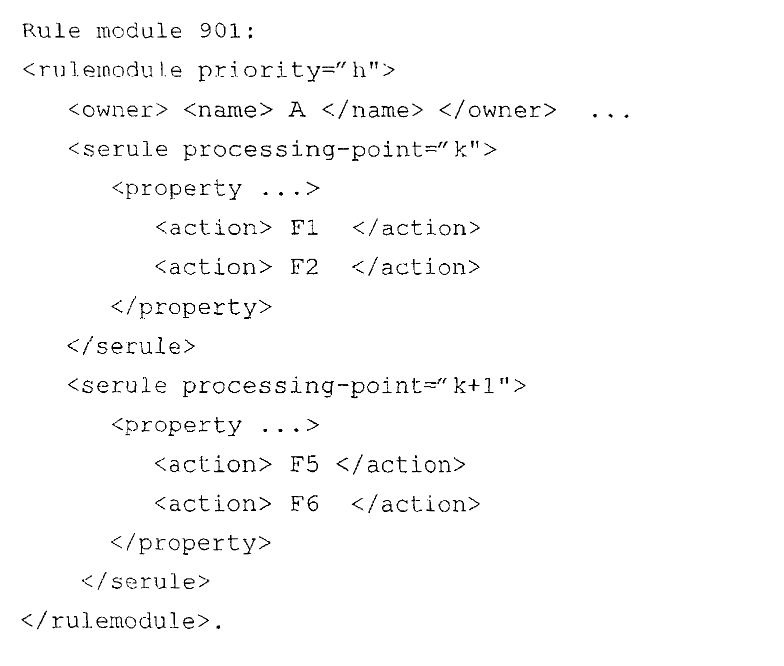

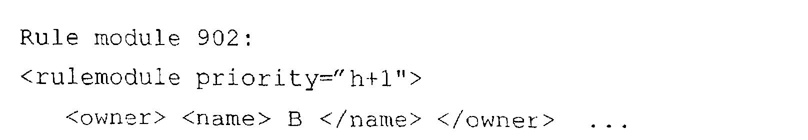

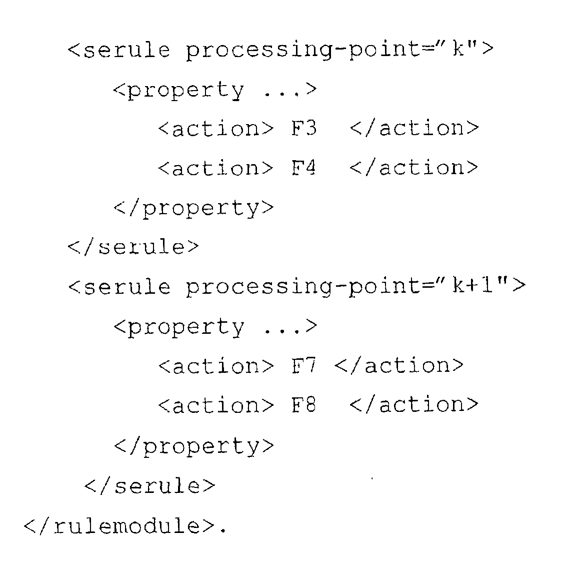

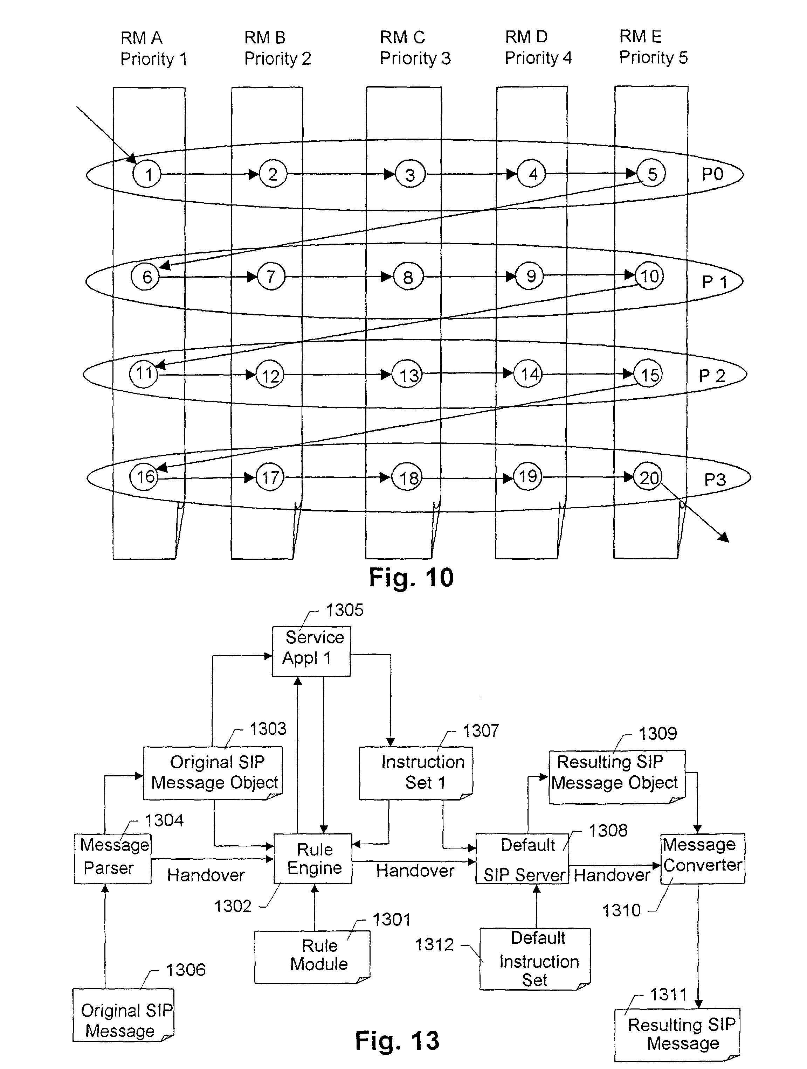

Fig. 10 illustrates the processing mechanism of the embodiment of fig. 9 in the case of multiple rule modules and multiple processing points. According to this embodiment, there are four processing points enumerated P0 through P3 and five rule modules RM A through RM E, with priorities 1 through 5, respectively. According to the processing rules described in connection with fig. 9, services are processed as indicated by the circles in fig. 10 which are enumerated 1 through 20 and connected by arrows. Each enumerated circle may represent a set of rules invoking a number of actions.

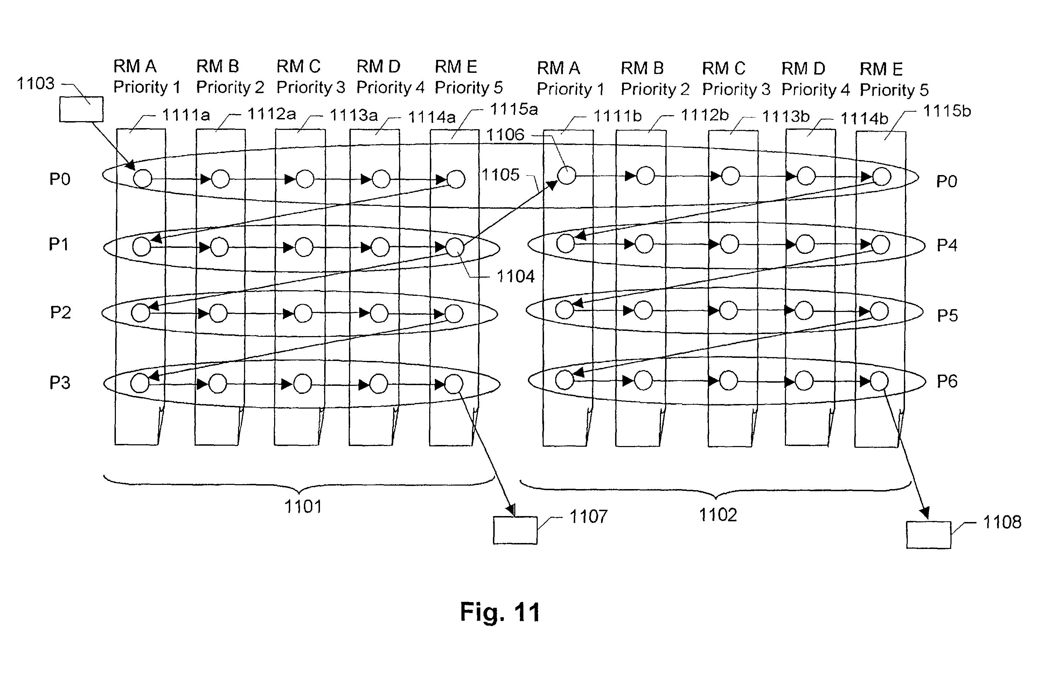

Fig. 11 illustrates another example of the processing rules described in connection with fig. 9. Fig. 11 illustrates instances 1111a-1115a of rule modules RM A through RM E on the left side 1101 and instances 1111b-1115b of the rule modules RM A through RM E on the right side 1102 of the figure, respectively, The rule modules RM A through RM E comprise rules corresponding to processing points P0 through P6. Hence, the instances of rule modules on the left side 1101 may represent different sections of the same respective rule modules as the rule modules on the right side 1102. As was described in connection with fig. 6, the processing points P1-P3 are triggered by SIP requests, while the processing points P4-P6 are triggered by responses. Processing point P0 is triggered by both requests and responses. Hence, in this example, and incoming SIP request 1103, e.g. an INVITE request, triggers services of rule modules RM A through RM E which are related to processing points P0-P3, in the order indicated by the arrows on the left side 1101 in fig. 11. In the example of fig. 11, it is further assumed, that a service 1104 outputs an instruction causing a response 1105. This response, in turn, triggers the processing of the rules of the rule modules RM A (111b) through RM E (1115b) which are related to the processing points P0 and P4-P6, as indicated on the right side 1102 of fig. 11, starting with the service(s) 1106, and resulting in an outgoing message 1108, e.g. a generated provisional response. The processing of the services on the left side 1101 further results in an outgoing message 1107, e.g. an INVITE proxy request.

Fig. 12 illustrates a hierarchical rule module processing according to a preferred embodiment of the invention. When the rule engine 1200 receives an event 1201, it identifies the relevant rule modules 1216-1219 of different priorities for this event in the rule base. The rule engine 1200 generates a current event context 1202, initiates processing of the highest priority rule module 1216 and passes control over the generated current event context 1202 to that rule module 1216. When the processing of the highest priority rule module 1216 is completed, the rule engine 1200 invokes the subsequent rule module 1217 according to rule module priority and passes the modified current event context 1206 to the next rule module 1214. Similarly, the subsequent rule modules 1218-1219 are invoked and control over the respective current event contexts 1207 and 1214 is passed to them. Finally, the resulting event context 1215 is returned to the rule engine 1200. According to this embodiment of the invention, each invoked rule module may subsequently invoke one or more other rule modules. According to a preferred embodiment, rule modules are divided into two types of rule modules: Rule modules 1216-1219 which may be invoked by the rule engine 1200 according to their order priority, and rule modules 1220-1225 which may only be invoked by other rule modules. The latter type of rule modules may formally be identified by a special order priority, e.g. the ordering priority 0. According to this embodiment, rule modules with this priority have special restrictions associated with them: Rule modules with this ordering priority should not be invoked by the rule base processing procedure of the rule engine 1200, but are invoked from another rule module with explicit privileges to do so. Rule modules with ordering priority different from 0 are not invoked from another rule module, but only by the rule engine. Rule modules with the same owner may have the same ordering priority (different from 0), but in that case, they should have different event contexts, e.g. SIP, HTTP, etc. This means that they should not be invoked on the same event context. Rule modules with different owners may have the same ordering priority, but in that case they should not be invoked on the same property in the same event. In other words, rule modules that can be invoked on the same message property from a given event context should have different priorities, unless it is zero. The first rule module 1216 is invoked by the rule engine, before any rule modules with ordering priority 0 are invoked. This rule module is termed the root rule module. When the root rule module 1216 invokes priority 0 rule modules, they may again invoke other priority 0 rule modules. These relationships between rule modules is termed the rule module hierarchy. This mechanism of invoking rule modules from within rule modules gives a hierarchical distribution of administrative domains, also called the hierarchical administrative domain model. The benefits with this model is that it is easy to administer, and gives a great amount of control to the master rule modules. It is a further advantage that additional rule modules may be added to an existing hierarchy without having to reassign a large number of priorities to subsequent rule modules.
The above rules avoid that rule modules are invoked twice by accident in the rule base processing procedure.

In the example illustrated in fig. 12, rule module 1216 invokes rule modules 1221 and 1222 in that order, passes control of the corresponding event contexts 1203-1204, and receives the resulting current event context 1205. Similarly, rule module 1218 invokes rule modules 1222-1223 with the corresponding event contexts 1208-1209 and the resulting event context 1213. Finally, the rule module 1223 invoked by rule module 1218 further invokes rule modules 1224-1225 with the corresponding event contexts 1210-1211 and the resulting event context 1212.

Hence, a hierarchical invocation process is performed, generating a sequence of current event contexts indicated by the enumeration of the event contexts 1202-1215.

It is noted that, if there are more than one processing points defined, the above description of rule module processing should be understood as per processing point, i.e. for each processing point a corresponding hierarchy of rule modules is processed.

An important task of the rule base processing procedure of the rule engine 1200 is the mapping of SIP events to relevant rule modules. This process very much depends on the contractual relationships defined on the domain in question. A SIP event includes a number of message properties which can be used to detect a possible contractual relationship. These properties include siprequest.from, siprequest.to, siprequest.RequestURI, sipresponse.from, sipresponse.to, sipresponse.contact, and sipresponse.via. In particular, the From and Request-URI of a SIP message are important properties of an event used to detect a contractual relationship with a network operator or 3rd party service provider. However, other message properties may be taken into account, e.g. contact headers and via headers. A message property that can be used to detect a contractual relationship and thus trigger a rule module will be reffered toas a rule module trigger (RMTrigger).

When a SIP request message arrives at a SIP Server, at least one of the From or Request-URI message properties should specify a subscriber that has a contractual relationship with one of the network operators of the SIP Server. The message properties of From or the Request-URI may contain a domain name, like netopX.com, or an IP address of one of the network operators of the SIP Server, like 123.123.123.000. In addition, the From and Request-URI include a subscriber identifier, like a name or phone number. This is contained in the SIP URL or TEL URL. The SIP-URL also has parameters like "transport-param", "user-param" and "other-param". These parameters may include information specific to a network operator, as the IMSI to identify mobile terminal subscribers and terminals.

For example, using the above properties a SIP event may be mapped to a unique network operator, if a number of requirements are fulfilled, for example, if each of the network operators of the SIP Server has a unique domain name, like netopX.com and netopY.com, and if they have different IP addresses. If they share the same IP address, conjectural relationship resolutions may be ambiguous, as the message properties of the From and Request-URI may contain an IP address and not a domain name.

Third party service providers that upload/register service applications on the SIP server have a contractual relationship with the network operator which can be detected. For example, the 3rd party service provider may receive an allocated ID from the network operator with whom the 3rd party service provider has a contractual relationship. If the network operator has a domain name, e.g. netopX.com, and associated IP address, the 3rd party service provider with unique name partyZ, may receive allocated IDs following a name convention, e.g. "partyZ.netopX.com". Now the From and Request-URI may be matched to relevant rule modules. As netopX.com and partyZ.netopX.com both should be invoked on an event containing netopX.com in either the From or Request-URI, they should have different explicit ordering priorities. It is understood, that other name conventions may be introduced instead.

It is understood, that the mechanisms of order priority and rule module hierarchy may be applied independently of each other or in combination with each other, as was described in connection with fig. 12.

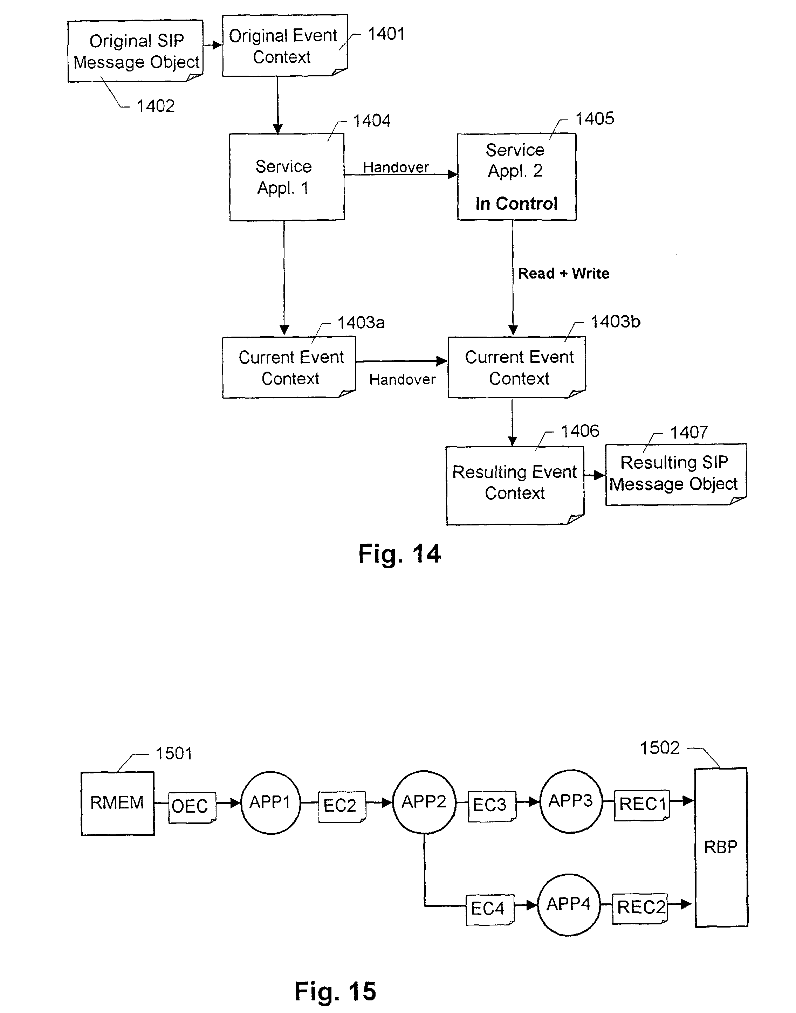

Fig. 13 shows an example of the flow of SIP messages and instruction sets according to an embodiment of the invention. The message parser 1304 converts the original SIP message 1306 into an original SIP message object 1303. This is used to invoke the initial rule module 1301 and, hence, the first sequence of service applications. When a rule module 1301 is loaded into the rule engine 1302 and executed, one or more actions are reached, depending on the signalling message object 1303 which was received from the message parser 1304 and on the basis of which rule module 1301 was identified, e.g. as described in connection with fig. 12. When an action is reached, the service application 1305 associated with the action is invoked, that is, it is activated, possibly with parameters, and possibly with access to the entire signalling message object 1303 which triggered the application. The access privileges to the entire signalling message depend on the functionality and scope of the used service access API, e.g. CGI API versus OSA API, as well as the privileges of the owner of the rule module 1301 and the privileges of the invoked service application 1305. The initial signalling message object 1303 represents the entire set of message properties embedded in the original SIP message 1306 which may include multiple media types. The invoked service application 1305 performs some processing based on the signalling message 1303 and hands back the result 1307 to the rule engine 1302. This result is referred to as the instruction set, as it can potentially contain multiple instructions, e.g. CGI instructions, OSA API instructions etc. When multiple services are invoked based on one signalling Message, the rule module processor will end up with multiple instruction sets. This set of instruction sets is termed the "instruction set base".

The rule engine 1302 and the application execution engine determine which instructions to mediate to the SIP Server default behaviour 1308. The instruction set may be filtered based on privileges and feature interaction resolution, before mediating it to the SIP server default behaviour 1308 which may further merge the instruction set with a default SIP instruction set 1312. The resulting set of instructions is termed the "resulting instruction set". The Resulting SIP message object(s) 1309 represent(s) the actual SIP messages, which are to be sent downstream or upstream. Hence, this leads to one or more resulting SIP message objects 1309 which are sent to the message converter 1310 which, subsequently, transforms it into one or more SIP messages 1311 to be sent.

Fig. 14 illustrates a mechanism for managing multiple instruction sets according to a preferred embodiment of the invention. According to this embodiment, an event context is a representation of a SIP message object, but it may contain additional information, such as feature interaction information as well as the MIME types included in the message body of the SIP message. The original event context 1401 represents the original SIP message object 1402. The current event context 1403a-b is an event context based on the instruction set generated by the service applications 1404-1405. At any given time one service application is in control of the current event context. Even when multiple service applications are concurrently running and applying control to the handling of the transaction, only one of them has the control of the current event context at any time. In the example of fig. 14, two service applications 1404-1405 are shown. Initially, service application 1404 has control over the current event context 1403a. When the application 1404 has completed its processing, the control over the current event context is handed over to the service application 1405. At this point, service application 1405 controls the current event context 1403b, i.e. it has the right to read and write it. In one embodiment of the invention other service applications may have the right to read the current event context 1403b.

Hence, triggering of subsequent service applications is based on the current event context. The current event context is further cleaned for possible feature interaction problems, so subsequently invoked service applications can rely on it. When control is handed over from one service application to the next through the invocation mechanism provided by the rule engine, the ownership of the current event context is handed over. In this way, when all service applications have been invoked and applied their instructions, the final resulting event context 1406 is achieved. Thus, the resulting event context 1406 represents the resulting SIP message object(s) 1407. Note that this mechanism does not exclude parallel processing, since the service applications 1404 and 1405 may be executed in parallel. However, according to this embodiment, a sequence of updating the current event context is enforced.

It is further noted that a service application may fork a request to multiple destinations. This results in the generation of multiple current event contexts.

Fig. 15 illustrates a tree of cascaded chains of service applications according to an embodiment of the invention. When services are executed on different SIP servers and apply control to a session, they provide a natural ordering of services, even if they are unaware of each other. This ordering may be said to be upstream or downstream. A downstream ordering is the ordering of services as they are invoked downstream from the origin client to the destination server. An upstream ordering is the ordering of services as they are invoked upstream from the destination server to the origin client. When services which apply control to one instance of a session are invoked in a given order on the same SIP server, the services can be thought of as cascaded according to the same ordering principle. This ordering principle is called cascading of services and the chain of services is called the cascaded chain of services.

When a request is received, the earlier a service is invoked based on this event, the more logically upstream it is considered to be in the chain of cascaded services. When a response is received then the earlier the service is invoked, based on this event, the more logically downstream it is considered to be in the chain of cascaded services. Hence, the applications are treated as if they were triggered on different hosts.

This model is conceptually simple and provides a natural algorithm for resolving conflicts between the instructions of multiple service applications at the same SIP event.

On reception of a SIP event the actions are executed in order of priority in the following manner:
1) Control is passed to the first application.
2) Some response is received from the first application
3) Control is passed to the second application
4) Some response is received from the second application and so on.

However, if the first application terminates the request, the second application is not invoked.

In this way a decision about whether to invoke a subsequent application can depend on the output from the previous application. Furthermore, instruction priorities associated with actions are by default ordered according to the cascading principle.

If an application forks a request, there is not a simple chain of cascaded services but rather a tree of cascaded services. This will be referred to as the "request tree". A request tree represents a number of cascaded chains of applications. Each path from the root of the tree to one of the leaves represents a cascaded chain.

Fig. 15 shows an example of a request tree where a service application APP1 is invoked by the rule module execution module 1501 with the original event context OEC as an input. When the control is handed over from the application APP1 to the subsequent application APP2, the application APP2 gains control over the current event context EC2. The application APP2 forks the request creating event context EC3 and event context EC4. A lower priority action invokes application APP3 due to one or more properties in event context EC3. Another lower priority action invokes another application APP4 due to one or more properties in event context EC4. This leads to a tree-like structure representing the trail of invoked applications. In this tree the branches are representations of event contexts. The nodes are representations of triggers. The root of the tree is the original event context OEC. The leaves of the tree are the resulting event contexts REC1 and REC2.

When there are no more actions in a rule module all the current event contexts are fed back to the rule base processing procedure 1502. This procedure may invoke another rule module which will construct more of the request tree. Consequently, the tree may become quite large with many nodes and branches depending on the services that are triggered.

It is noted that in some cases an application may send an asynchronous feature instruction to the service support environment, i.e. not related to an existing transaction. In this case the application has started a new transaction and is considered to be at the root of a new cascaded chain tree.

In order to allow parallel processing of services, the service support environment may be capable of passing control to more than one service simultaneously. This is not in contradiction with the cascaded services model, because the instructions from the parallel invoked services should be applied in the order of the cascading. If the more downstream service responds before the more upstream service, the rule engine waits for the more upstream service to respond, before it can mediate the instructions. The instructions are mediated as if the services where invoked one-by-one. The administrator should be capable of specifying whether a group of actions should be applied simultaneously in this manner.

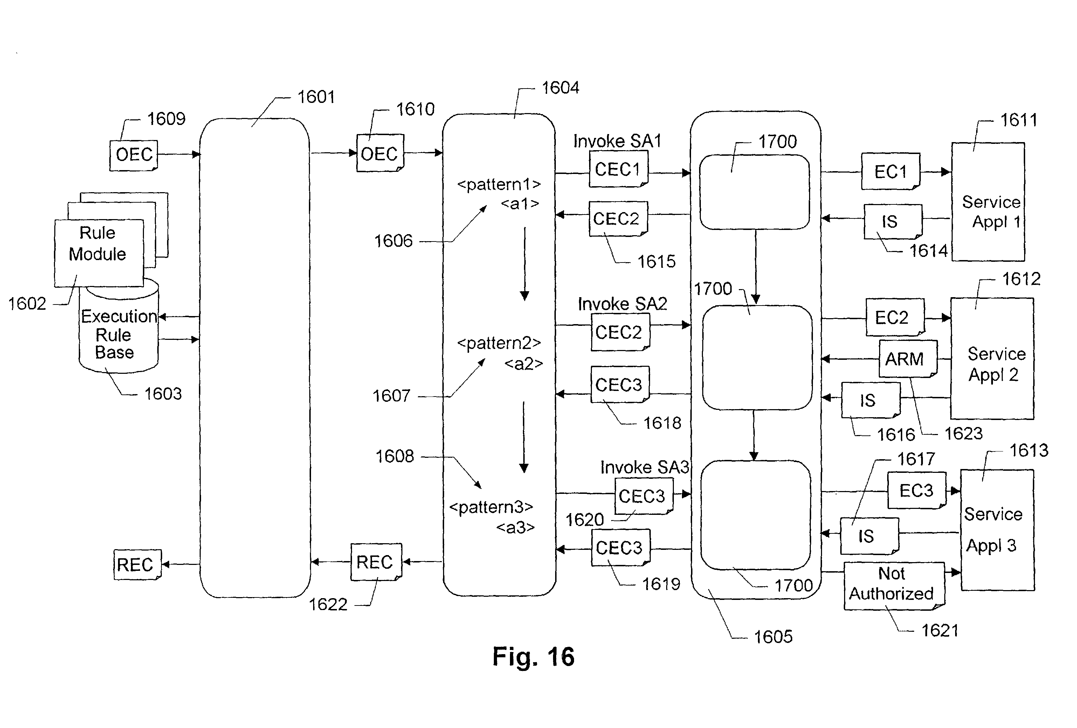

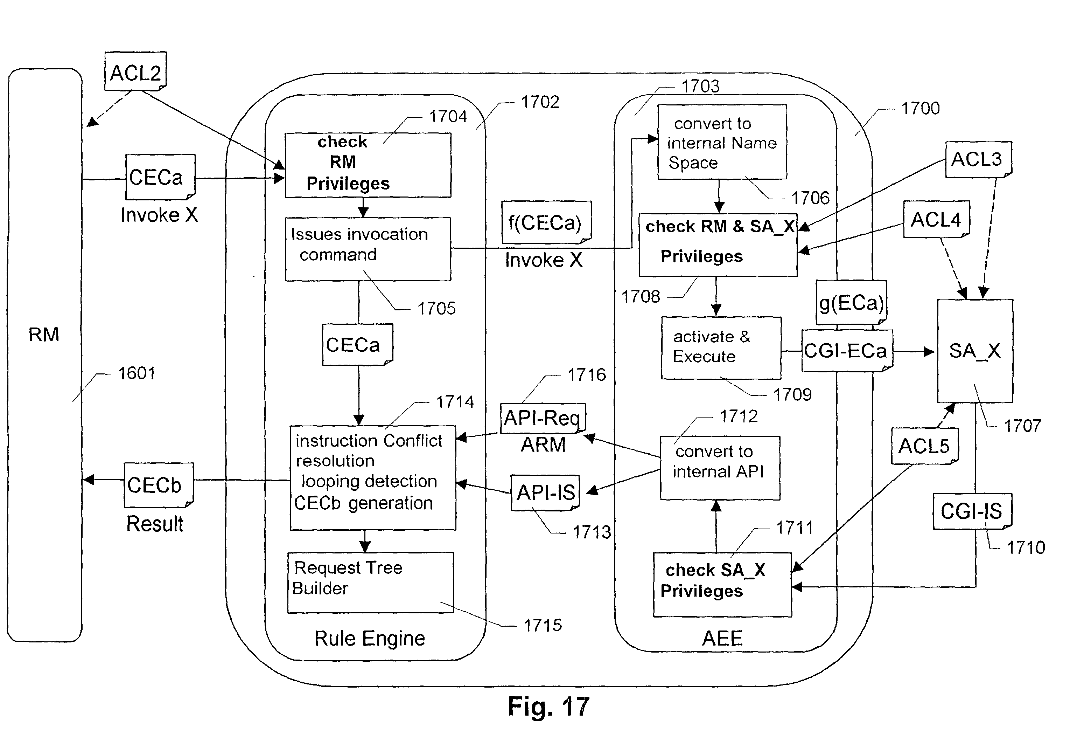

Fig. 16 shows the software components of a rule engine according to an embodiment of the invention. The rule base processing procedure 1601 invokes the rule modules 1602 stored in the rule base 1603 in the right order. The rule module processing procedure 1604 executes the rules in the rule module. The service interaction module 1605 covers a set of functions 1700 including enforcement of the triggering, feature interaction, privileges and rights. The functions 1700 will be described in greater detail in connection with fig. 17.

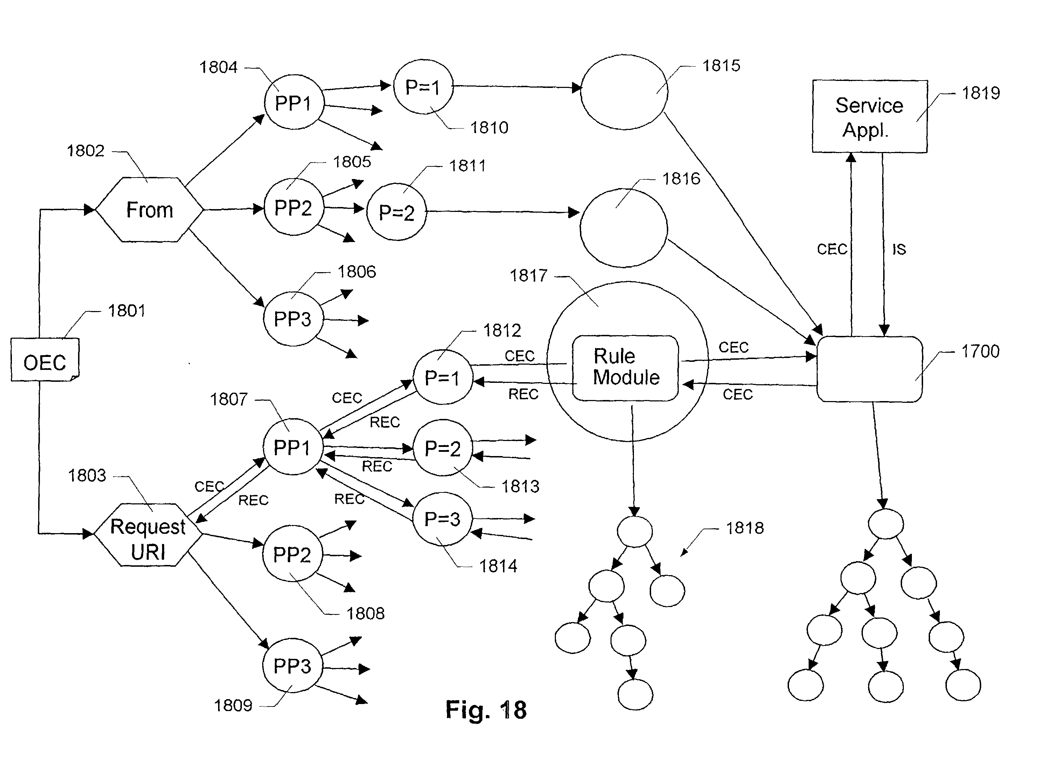

When a SIP event is reported to the rule engine in the form of an original event context 1609, the rule base processing procedure 1601 is executed in order to find and execute the correct rule modules in the correct order. The rule base processing procedure 1601 passes the rule modules to be processed and the original event context 1610 to the rule module processing procedure 1604. The ordering of the rule modules together with the ordering of the rules within each rule module determines the ordering of patterns and actions 1606-1608 processed by the rule module processing procedure 1604. The actions invoke corresponding service applications 1611-1613. When invoking service application 1611, the original event context is passed as the current event context CEC1 to the service interaction module 1605 which, in turn, passes the event context EC1 to the service application 1611. The service application 1611 results in a set of feature instructions 1614 which cause an update of the current event context by the service interaction module 1605. The resulting current event context 1615 is returned to the rule module processing procedure 1604. The service applications 1612 and 1613 are invoked in a similar manner, resulting in corresponding instruction sets 1616-1617 which are converted by the service interaction module 1605 into corresponding current event contexts 1618-1619. During this conversion, the service interaction module 1605 performs authorization checks and, if a service application 1613 returns an unauthorized instruction set 1617, the unauthorized instructions are not converted. Hence, the current event context 1619 does not differ from the incoming event context 1620. Preferably, the service application is notified 1621 about this failure. It is noted that a service may result in the spawning of multiple current event contexts as described in connection with figs. 15 and 18. When a rule module is finished processing the patterns and actions 1606-1608, the final set of current event contexts 1622 is returned to the rule base processing procedure 1601. Subsequent invocations of rule modules will be dependent on this set of current event contexts. It is noted that a service application may arm/disarm events and triggers for future events, as will be described in greater detail below. Hence, a service application may further return an arming request 1623.

Fig. 17 shows steps performed by the service interaction module between the processing of the rule module and the processing of the service application in the embodiment of fig. 16. This functionality 1700 includes feature interaction management and checking of privileges performed by the rule engine 1702 and the application execution engine 1703. When the invocation command and the current event context CECa is received from the rule module processor 1601, the privileges of the rule module are checked in step 1704. The privileges of the rule module are specified in an access control list ACL2 associated with the rule module. If the rule module has the privileges to issue invocation commands, in step 1705, the rule engine 1702 sends the invocation command to the application execution engine 1703 via the application execution engine manager (not shown). It may only be necessary to send part of the current event context to the application execution engine 1703, as denoted by f (CECa).

In step 1706, the application execution engine 1703 converts the received event context f(CECa) into a suitable data format for the service application 1707 to be invoked. This may include the conversion to a suitable name space for the invocation of that service application. Furthermore, in step 1708, the application execution engine 1703 checks privileges and rights. An access control list ACL3 associated with the service application 1707 may specify the privileges of the service application 1707 to access the value of f(CECa) or part of it. Furthermore, the rule module has access to the service application 1707 depending on another access control list ACL4, also associated with the service application 1707. If access is granted, the service application 1707 is invoked in step 1709, and relevant parts of the event context g(ECa) are provided as an input. Subsequently, the service application 1707 returns control to the rule engine 1702 via the application execution engine 1703 by sending the instruction set 1710 or an internal representation of the instruction set. In step 1711, privileges and rights of the service application 1707 to issue these instructions are checked, e.g. based on an access control list ACL5 associated to the service application 1707. If the service application 1707 has the privileges to issue these instructions, the instructions are converted from the internal representation (step 1712), and the converted instructions 1713 are forwarded to the rule engine. Furthermore, any arming requests 1716 are forwarded as well. In step 1714, possible feature interaction problems with earlier issued instructions from previously authorized and invoked service applications are resolved. This resolution is based on whether previously invoked applications have protected message properties in the current event context. The next current event context CECb is generated and returned to the rule module processor 1601. Finally, in step 1715, the rule engine stores information about the invoked service in memory, e.g. by building the request tree described in connection with fig. 14. The request tree is used in connection with the reporting of future events.

As mentioned above, some services, e.g. monitoring applications, are interested in future events. In order to tell the rule engine about this interest in future events, the service application has to request for event reports, also termed dynamically arming for event reports.

According to a preferred embodiment of the invention, dynamically arming of transaction events is tied to the processing of a SIP transaction, which is bounded in time. Transactions may typically last from between some milliseconds to a few minutes, depending on the configuration of the SIP server. Since, dynamically arming of transaction events only applies to the lifetime of a transaction, this type of arming is non-permanent and implicitly disarmed when the transaction is ended, thereby providing a fast mechanism. If an application arms events which pertain to the transaction it was triggered in, the application maintains its place in the cascaded services model. Responses are reported to all the applications which have armed them, starting with the leaf of the tree, i.e. the downstream most application. During the lifetime of a transaction the request tree exists in the memory of the rule engine. Subsequent events related to the same transaction are thus related to the request tree. Events relating to the request tree can come from applications, from downstream servers and from upstream clients.

Events from upstream clients enter the request tree at the root. This means that they are first reported to the application at the root of the tree. This application may terminate or redirect the event in which case it will not be sent further in the original tree but a new request tree may be constructed. A request may also need to be forwarded to all the same destinations as the original request, or the request may need to be sent to one of the destinations to which the original request was forwarded. Events from applications enter the request tree at the appropriate node. Events from downstream servers enter the request tree at one of the leaves.

This leads to the mechanism of request-tree traversal, in which the rule engine remembers the order in which applications where invoked, i.e. the request tree. It is an advantage of this embodiment that it provides a clear rule for the order in which events are reported within the context of a transaction. The clear rule is the cascaded services model which is a conceptually simple rule that can be easily understood by administrators and application designers. This also simplifies the API via which the application execution engines add rules to the rule base. Rather than having to arm for CANCEL of a specific branch in a rule module it can simply arm for cancel of the given call leg.

There are various ways to implement the request tree traversal.

For example, the Rule engine may achieve this traversal by using the VIA header and branch parameter. In effect this would mean creating a separate instance of the rule engine every time the destination address is changed by forwarding the request to the SIP server. The DNS lookup done by the SIP stack would then determine whether or not the request comes back to be processed by the server a second time. When a request is received from the SIP server it would be treated as a new Request. The rule engine should have a mechanism for ensuring that services, for example those triggered on the FROM field, would not be erroneously invoked again.

Alternatively, in a preferred embodiment, the event is handled at the host for the entire request tree, i.e. including all forwardings until all the leaves of the request tree represent destinations elsewhere in the network. This embodiment has the advantage of being more efficient as fewer instances of signalling state machines and manager classes are required. For example, the request tree may be implemented, by having, for each trigger of an application, an instantiation of a node object which can have pointers to the previous and the next nodes in the tree. The following pseudo code fragment shows how the building of a request tree may be incorporated in the algorithms for rule base processing and rule module processing. The idea is to associate every event context with a RequestTreeNode. This is the RequestTreeNode at which the event context was created. Each node is either the root of the tree or it is associated with an action execution:

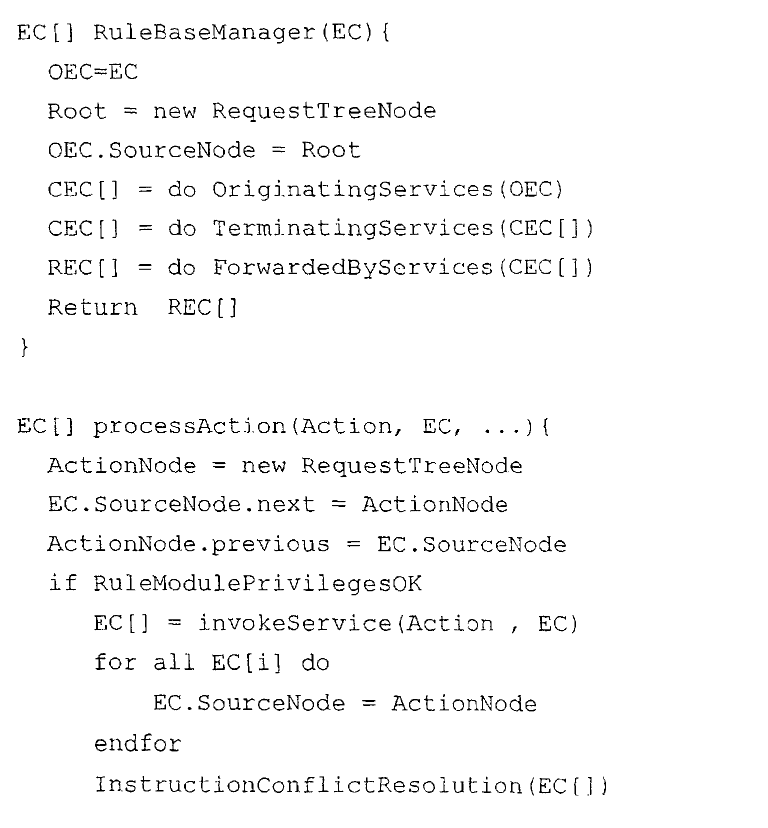

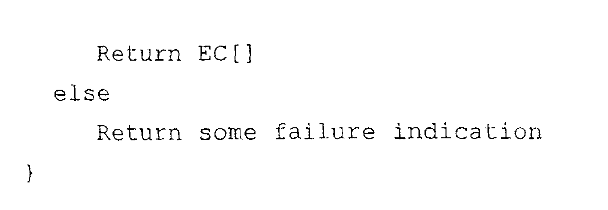

Considering the model of a logical cascading of service applications the following two general rules may be formulated for the service execution environment to follow:
- Events travelling upstream should be reported to the logically downstream most applications first.
- Events travelling downstream should be reported to the logically upstream most applications first.

The logical cascaded order of services is kept when distributing event notifications to prevent the highly complex and unmanageable situation that events can be reported to cascaded services in any order.

Preferably, the applications that arm such events are invoked at processing point 1 or 4 and their sub-processing points. Preferably, the network operator may specify in the rule list for processing point 4 a point where the dynamically armed triggers should be reported. This means that the logically cascaded chain of services established for the request is kept and new services are triggered either before or after this chain. The same rule can apply for subsequent requests that are related to an existing transaction. This time it will be at processing point 1 that the administrator may specify when to report dynamically armed events.

Alternatively or additionally, another type of arming may be employed which will be referred to as dynamically armed triggers which are added as rules to an appropriate rule module in the rule base. Dynamically armed triggers provide a less expensive mechanism in terms of processing power and execution memory for the reporting of events which do not pertain to the transaction in which the application was triggered. Preferably, these requests for event reports should be stored in persistent storage, i.e. they become rules in the rule base. These rules can be non-permanent by specifying an expiration timer, or permanent. In the latter case the service application should explicitly disarm the request for event reports to remove it. Alternatively, they may also be armed in a 'report-once then disarm' mode. Furthermore, if no expiration time is given, a default time, e.g. 1 hour, may be applied to the rule. When this time has expired, the rule is deleted. This has the advantage of avoiding that that the server runs out of data storage capacity.

Preferably, trigger rules are added to a rule module which the application has the privileges and rights to update. It will normally be the same rule module from which the application was triggered. Exactly where in the priority order within a rule module these rules should be added may be determined by an implicit rule priority order, i.e. an integer representing where the rule should be placed within the existing rule module. When a SERL script is first added, the rules are ordered in the order they appear in the script. If there are N rules, the integers 1 through N are implicitly associated with the rules. A rule can be deleted by referring to these numbers. A rule can be added by referring to the rule that the new rule should be placed after. This has the advantage, that the amount of data that needs to be exchanged when a rule is added to a large rule module is reduced.

If no position is specified, then the rule module engine may follow the following algorithm when adding these triggers: Search the rule module for the same property pattern as in the new rule. If a pattern is found, search for any sub-pattern, and so on. If no sub-pattern is found, insert the rule as the highest priority rule in the enclosed list of actions. If no similar pattern is in the rule module already, insert as the first pattern. This algorithm provides a logically advantageous placement of the rule. For example, it ensures that the actions for the caller where TARGET= FROM are not mixed with actions for callees where TARGET=RequestURI. It also means that rules added last are also the first encountered when an event happens. This is the simplest default behaviour.

It may be possible to indicate whether a trigger rule is permanent or should be automatically deleted once the event is reported. Which type of rules an application can add dynamically may be linked to the privileges and rights assigned to the application.

In another alternative embodiment the cascaded request tree is only maintained for the lifetime of an event. In this case, when the last application in the chain has finished its processing and the SIP event is sent then the cascaded chain is no longer relevant. Until that point it may be useful for the Rule engine to hold a representation of the cascaded chain in memory. This is because applications may run on separate servers and may take some time to respond to the invocation. While the rule Engine is waiting for a response an earlier application in the chain may cancel the request. If this happens, the rule engine will need to inform the application execution engine of the application it is waiting for. This means that the rule engine should remember which was the next application in the chain. By the time the SIP event has been forwarded all the applications in the chain should have armed rules for the events which interest them, thus there is no longer a need for the rule engine to remember the cascaded chain. The advantage of this solution is that the rule engine itself is simple. It just reports events based on Rule modules at the relevant processing points. However, this solution is complex to administrate and places the complexity of ordering of the events into the applications. i.e. the applications need to decide in which priority position the rule should be added in a rule module.

Fig. 18 illustrates the tree structure of the processing of rule modules according to an embodiment of the invention. When an event is received, the rule base processing unfolds a processing pattern which will be referred to as the rule base tree. When a request arrives at the SIP Server corresponding to an original event context 1801, the associated subscribers may be the originating party (i.e. caller) and/or the terminating party (i.e. callee). The caller is identified by the From header field. The Callee (or current callee) is identified by the Request-URI. The From header field and the Request-URI should uniquely identify a subscriber at the SIP Server where these subscribers have a contractual relationship with the network operator and service providers. Following the cascading principle, the originating services 1802 are invoked before terminating services 1803, even if the originating and terminating parties are located at the same host. A third category of services may also be invoked. These are termed the forwarded-by services (not shown). This category of services is invoked, if a request is forwarded to a new destination belonging to another subscriber. In this case originating services may need to be invoked on behalf of the callee. For each party, the services are invoked based on location of the rule modules as they are placed in the different processing points 1804-1809. For each processing point, the sets of rule module priorities 1810-1814 are examined for a match. Within each priority at most one rule module 1815-1817, respectively, is invoked. However, a rule module 1817 may be the root of a rule module hierarchy 1818 as described in connection with fig. 12. For simplicity, such a rule module hierarchy may be considered as a single rule module. Hence, the function of the rule module processing 1601, the functions 1700 of the service interaction module and the service applications 1819 invoked by the rule modules, may be considered as a leave in the rule base tree. Based on the current event context CEC, the rule module 1817 is invoked and it and returns a resulting event context REC. This resulting event context REC is considered the current event context CEC for the next rule module that is invoked. When all rule modules have been invoked and the last of them returned the resulting event context, then the resulting event context is the set of SIP signaling messages that will be sent upstream and/or downstream, as answer to the original incoming SIP message.

The above processing structure which is graphically illustrated in fig. 18 may further be illustrated by the following example of a pseudo code fragment:

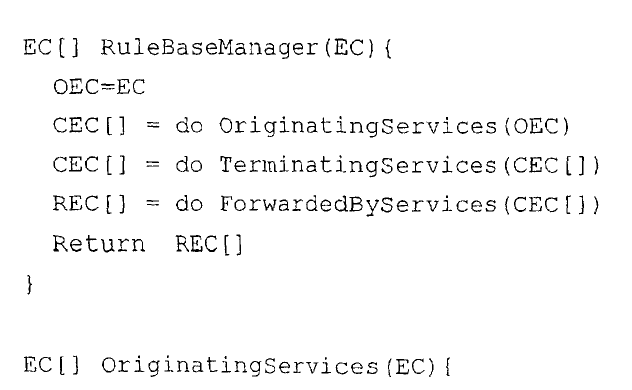

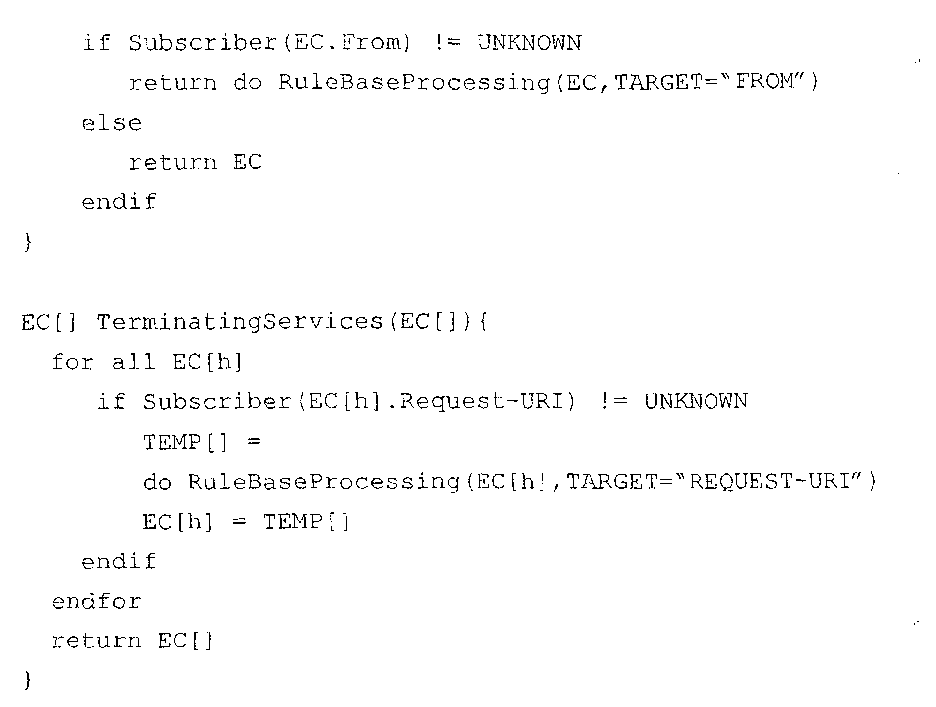

Where:

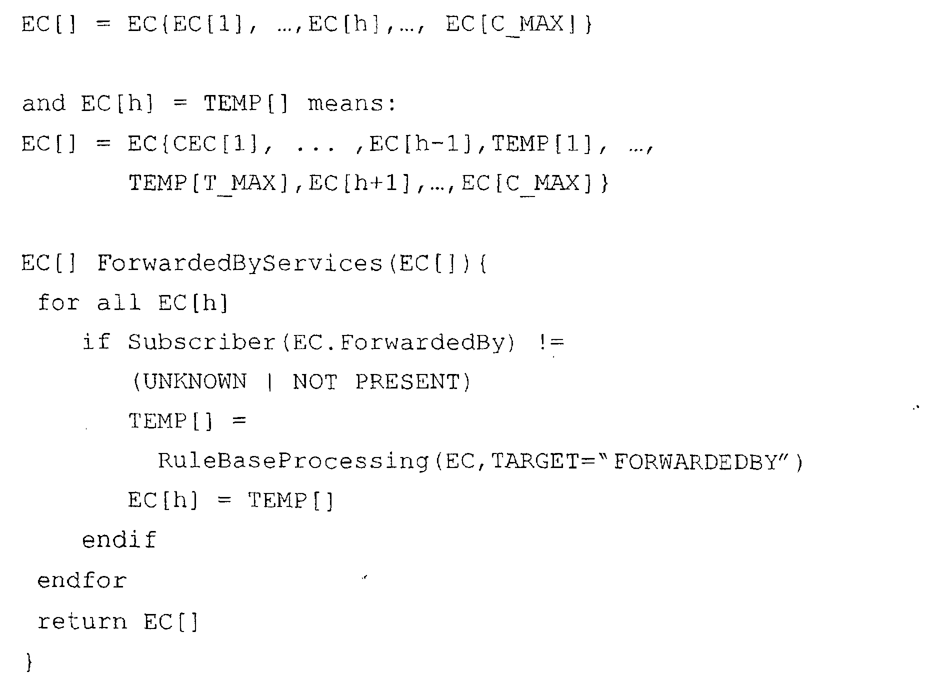

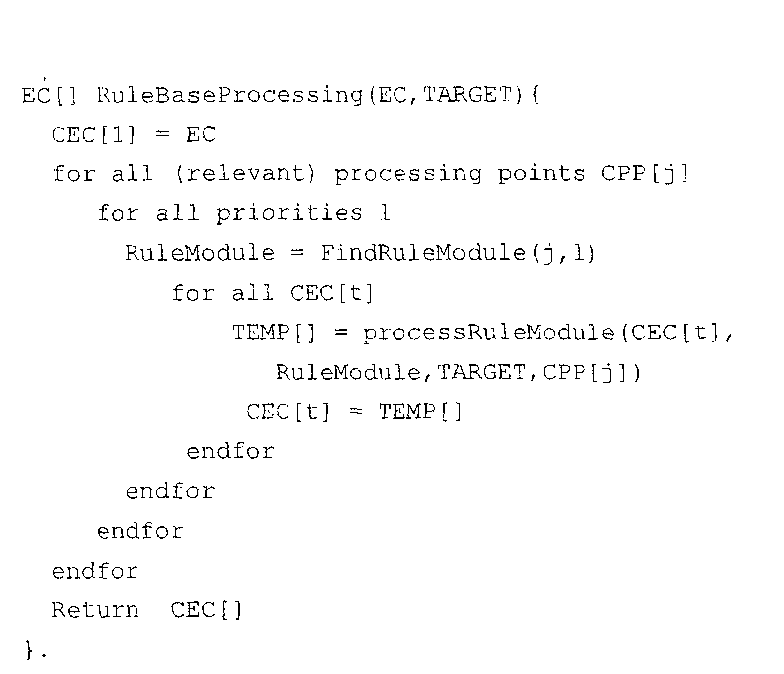

It is noted that a service application may change the From header field or the Request-URI. Furthermore, the resulting From header field or the resulting Request-URI may belong to another subscriber which may even be unknown to the SIP Server which processes the event. If the resulting From and/or the Request-URI is a new but known subscriber at the SIP Server, the services associated with this subscriber are invoked as well. In this case the rule base processing procedure may be invoked recursively resulting in a hierarchic structure of rule base trees.

Processing of a rule module comprises the step of taking each action in turn in priority order, evaluating whether the enclosing patterns match the current event context and if so applying the action. In the following, a method according to an embodiment of the invention is described in greater detail.

The following pseudo code fragment provides a high level description of an algorithm for processing a rule module:

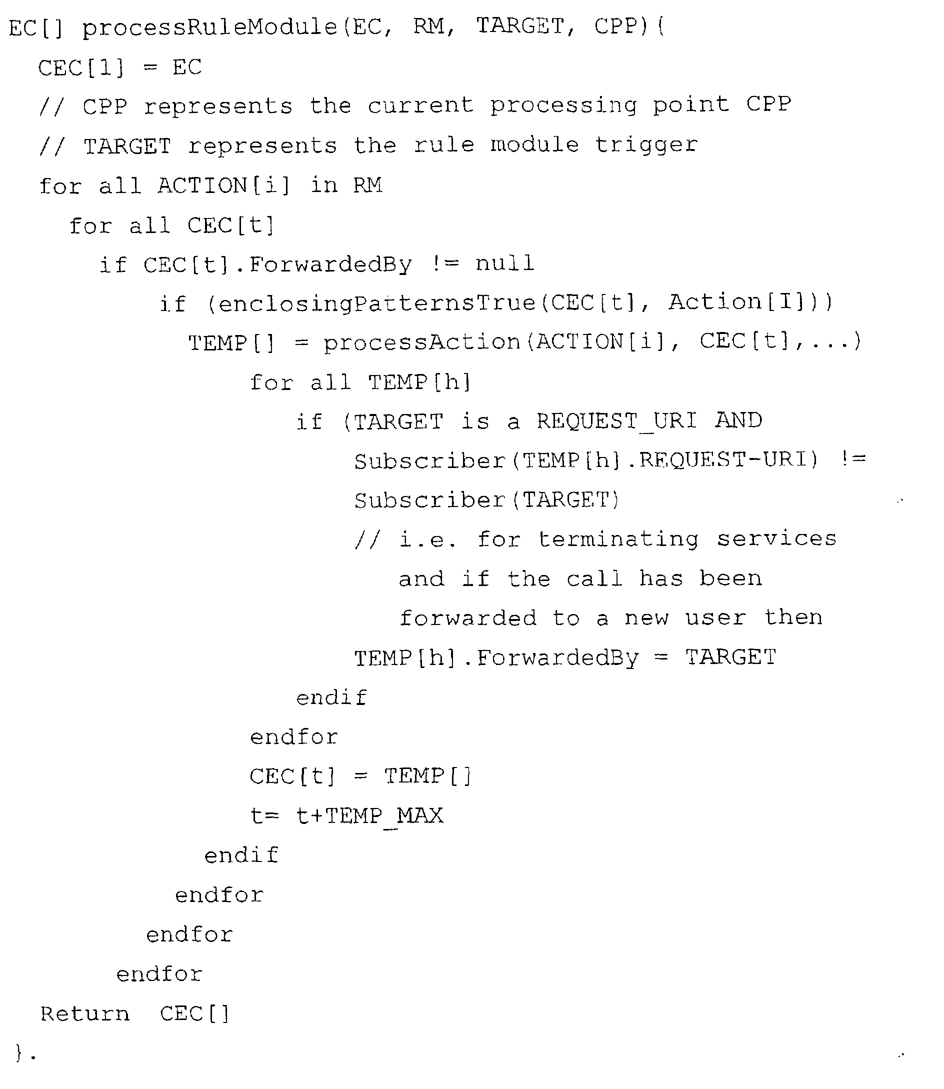

Here, The enclosingPatternsTrue method returns a boolean indicating if the patterns which enclose the actions are true. The processAction method may be implemented as indicated in the following pseudo code segment: 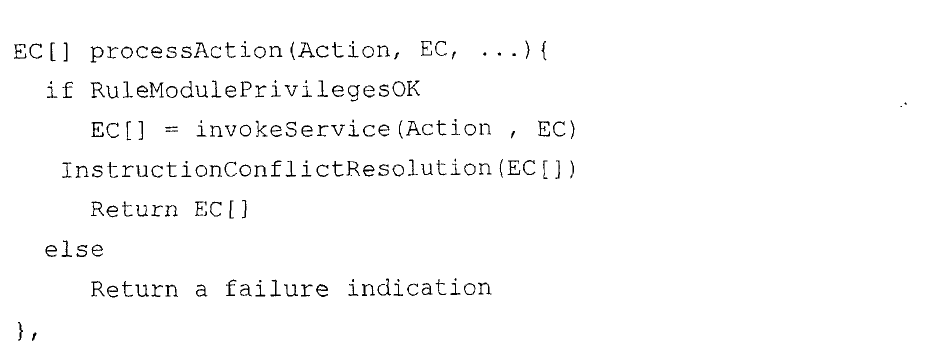 where EC[] is the set of forwardings of the event context. If it is empty, the service has terminated the request or response.

The service application may further issue instructions that are not instructions to forward the event context. These are not shown in the above algorithm. Such instructions may be processed by the rule base manager.

When executing actions in priority order, the result of the action may be to change the current event context. After such an action, the processing of the current rule module continues. After executing the current rule module, further rule modules may be executed according to the rule base processing procedure. The lower priority order actions are only executed, if the pattern(s) that enclose them match the new message properties, as specified by the current event context. This is illustrated by the following example of a fragment of pseudo script which describes two actions enclosed by two patterns:

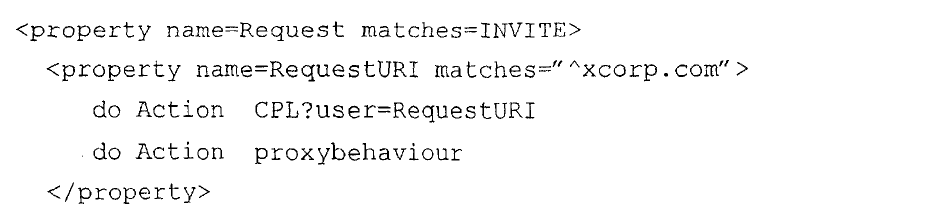

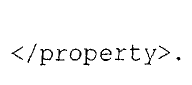

The two actions are enclosed by two patterns which indicate that the actions should only be applied if the request is an INVITE and the RequestURI contains the domain name xcorp.com. The first action invokes a user supplied CPL script. If the user CPL script does not change the destination of the request, the standard proxy behaviour is invoked to locate the user and proxy the request. If the CPL script changes the destination so that the destination will resolve to another host, the standard proxy behaviour need not be invoked.

If the message property which triggered the rule module changes so that it represents a new user, the processing of that rule module is stopped. The purpose of this is that rule modules can be thought of as being processed on behalf of a single user. This simplifies the rule module processing and script authoring.

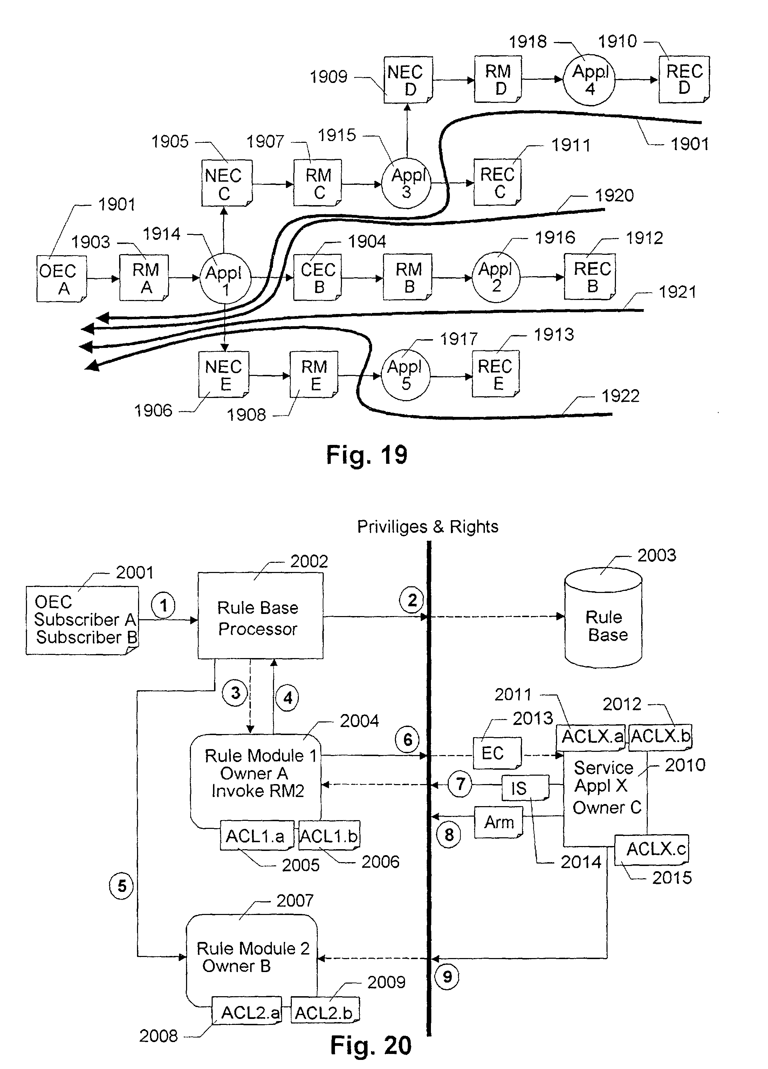

Fig. 19 illustrates the recursive processing of rule modules in a situation where service applications generate new event contexts according to an embodiment of the invention. The new event contexts may change the original rule module trigger and, in this case, new rule modules may be invoked recursively. For example, a subscriber's callee preferences, e.g. a CPL script, may forward the request to a new destination associated with another subscriber of the same SIP server. In this case the forwarded-to subscriber's callee preferences, e.g. another CPL script, should be invoked as well.

As illustrated by the example of fig. 19, an initial event context 1901 generates a recursion of rule module invocations, when a SIP request message is forwarded to multiple new destinations associated with other subscriber accounts. In the example of fig. 19, the application 1914 is triggered by the rule module 1903 on behalf of subscriber A. The rule module 1903 is triggered by the original event context 1901. The application 1914 generates three event contexts 1904-1906, where the rule module trigger has changed in the two event contexts 1905-1906 which are associated with new subscriber accounts. The event context 1904, is an updated event context but associated with the same subscriber whose rule module initially invoked application 1914. In this case the subscriber rule modules 1907-1908 associated with the new event contexts 1905-1906, respectively, are also invoked. Rule module 1907, in turn, invokes application 1915 which generates two new event contexts 1909 and 1910, and so forth. Consequently, a tree processing structure is created in which the leaves correspond to the set of resulting event contexts 1910-1913. Subsequently, the resulting event contexts 1910-1913 cause the SIP server to send SIP messages upstream or downstream or both. It is noted that the example of fig. 19 shows a simple case assuming that the rule modules only contain one action each.

If the five applications 1914-1918 in fig. 19 have requested to be notified of subsequent replies to the resulting SIP messages, according to the cascading principle, responses are notified to the logically most downstream application first. In fig. 19 responses to the resulting event context 1910 are notified first to application 1918, then to application 1915 and finally to application 1914, as indicated by the line 1919. For the resulting event context 1911 the corresponding sequence is application 1915 and application 1914, as indicated by line 1920. For the resulting event context 1912 the sequence is application 1916 and then application 1914, as indicated by line 1921. Finallv, for the resulting event context 1913 the sequence is application 1917 and then application 1914.

Fig. 20 illustrates a mechanism of enforcing access control in connection with rule modules according to an embodiment of the invention. Two types of access control are enforced. Access to rule modules should only be granted to authenticated and authorized parties, and access to service features should only be granted to authenticated and authorized rule modules. According to one embodiment this access control may be implemented by using so-called access control lists (ACL). Such a list may be an XML document possibly embedded in the rule module or located in the same directory as, or otherwise associated with, the rule module. Access control lists include access control rules. The access control list may enumerate each of the individuals or groups that are granted access to the rule module. The mechanism may also be used to explicitly specify privileges and rights of the rule modules, e.g. which service features the rule module may use. Therefore, it allows the administrator to manage privileges and rights of rule modules.

Furthermore, the mechanism may be used to manage privileges and rights of service applications. If a subscriber uploads a CPL script, there may be an associated rule module that invokes that service at the right time. In this case the rule module should have explicit privileges and rights to do so. This may be managed by associating access control lists with the CPL Script. The mechanism may further be used to explicitly specify privileges and rights of the service application, e.g. which service features, APIs, etc., the service application may use. Hence, it allows the administrator to manage privileges and rights of service applications.

Referring to the enumerated circles in fig. 20, the following privileges may be checked:
1) An original event context 2001 is sent to the rule engine after proper authentication of subscribers (A is the caller, B the callee). Rule modules and service applications are all authenticated, and have been given privileges and rights.
2) The rule base processor 2002 tries to access rule modules in the rule base 2003, which are associated with authenticated subscriber A or B or both. The rule base processor 2002 should not be allowed to access rule modules associated with other subscribers when processing this event. The rule base 2003 may be located on a remote server, in which case the rule engine should authenticate itself.
3) If allowed according to the access control list 2005, the rule base processor 2002 can invoke the loaded rule module 2004, say rule module 1 owned by A.
4) If allowed according to the access control list 2006, rule module 2004 may attempt to invoke another rule module 2007 associated with another owner B.
5) If allowed according to the access control list 2008, the rule base processor 2002 may invoke the loaded rule module 2007.
6) If allowed according to the access control lists 2005 and 2012, rule module 2004 may attempt to invoke service application 2010 if allowed. The service application 2010 may access the event context 2013 according to access control list 2011.
7) The service application 2010 may return a set of instructions 2014 which is mediated back to the rule module processor, if allowed according to access control list 2015.
8) The service application 2010 may arm/disarm for events, if allowed according to access control list 2015.
9) The service application 2010 may attempt to give instructions to another rule module 2007 than the one that invoked it, if allowed according to access control List 2012.

Access control to rule modules may be enforces by the policy nodes in a rule module. An example of a rule module access control list embedded in a rule module may look like this:

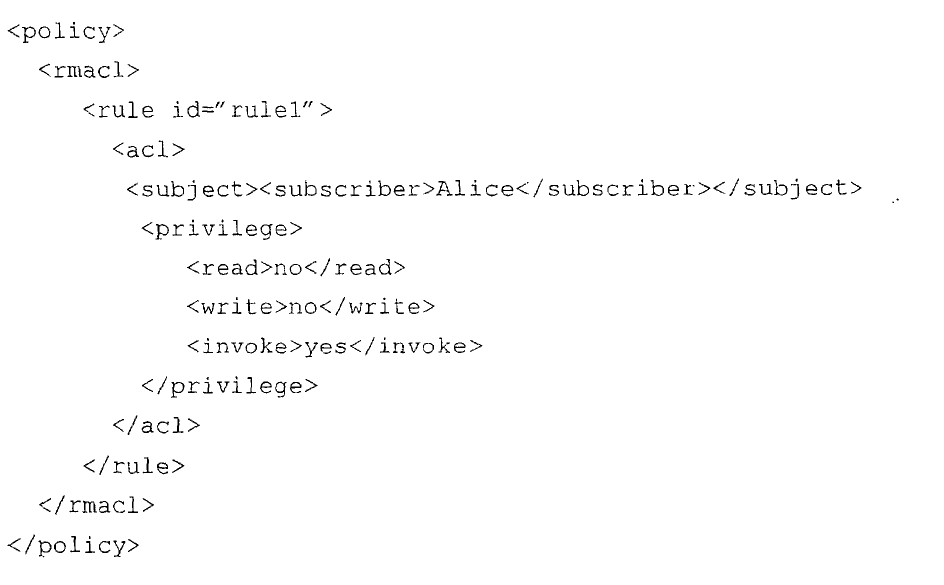

This policy could be applied to the entire rule module, in which case it states that the subscriber Alice, may invoke this rule module, but she must not read or write it.

Such policy XML scripts may be embedded within rule modules, but they may also be associated data elements. For example, the network operator may link a policy XML script to the rule module of a subscriber, specifying the privileges granted by the network operator to the owner of the rule module. These privileges could specify the services or service features the rule module is allowed to invoke, as illustrated by the following example of such a service access control list:

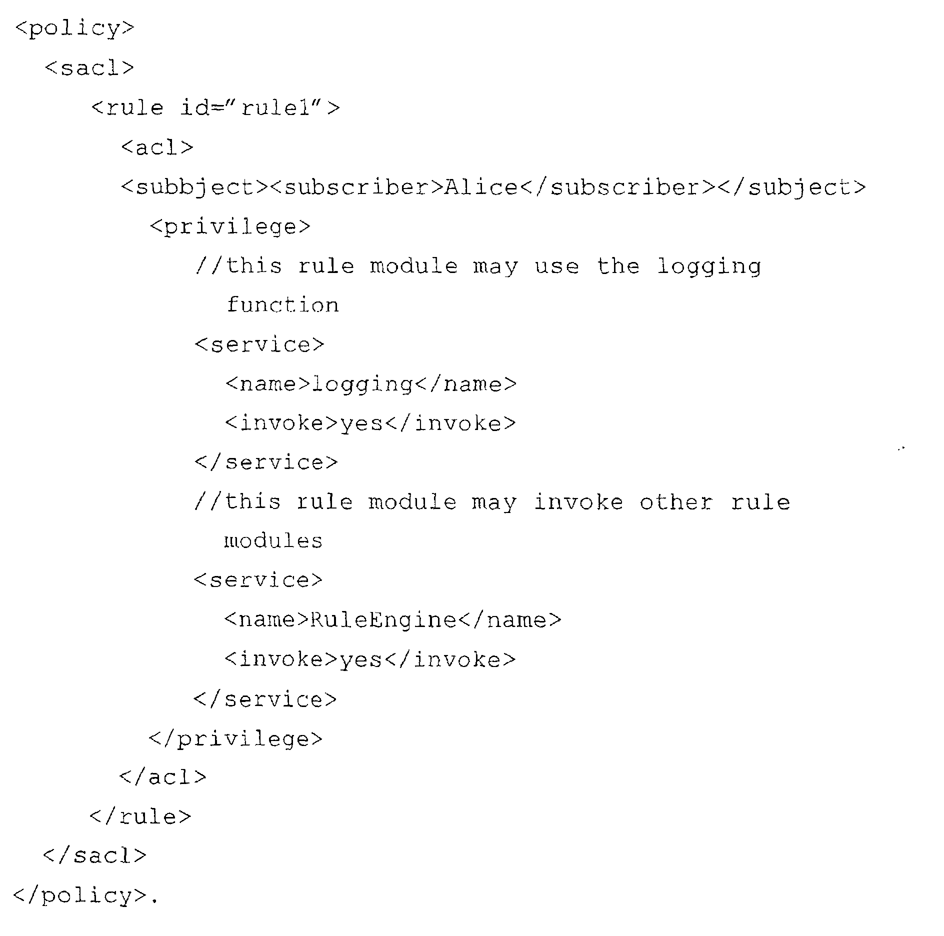

It is noted that a SIP server service support environment may further be adapted to generate accounting records, e.g. for content charging, applications charging, usage charging, or the like. For example, the records may be provided via logs from SERL scripts or CPL scripts, managed via library functions or a service applications, etc.

Furthermore, a system implementing service triggering according to the invention, preferably implements security measures in order to preserve safety and integrity of the SIP Node even though subscribers and 3rd party service providers may be allowed to upload not only service applications, but also instructions on how and when to invoke them, including some degree of feature interaction resolution. possible security measures include the configuration of privileges and rights of rule modules, service applications, name space convention policies, authentication mechanisms, authorization mechanisms, access protection, authentication and validation of uploaded rule modules, logging and monitoring, etc.

It is noted that the invention has primarily been described in connection with network services. However it is also applicable to be used in end user equipment.

Furthermore, it is noted that the invention, although primarily described in connection with SIP, may embrace other signalling protocols as well. SERL is not limited to invoke services based on SIP events, but may invoke any type of service application based on any type of event, in the context of any type of business model. The invention may be applied to manage services for any SIP enabled node. Using SERL scripts, services can be invoked from nodes that implements user agents, registrars, redirect servers or proxy servers.

Finally, it is noted that in the 3GPP architecture all subscriber data is administered in the so-called Home Subscriber server (HSS). SIP related applications are invoked from a node called a Serving Call State Control Function (S-CSCF). When a subscriber connects to a network his User Equipment (UE) performs a CSCF discovery to select an appropriate S-CSCF. The S-CSCF registers with the HSS that it is serving the subscriber in question. Service triggers could then be transported from the HSS to the S-CSCF in the form of service execution rules in the SERL format. The HSS could also use the Service Execution Rules associated with a subscriber to decide to allocate a different S-CSCF based on which S-CSCF has the correct services installed. Hence, an embodiment of the invention may be used in order for the HSS to place the subscriber based triggers at the correct processing point and priority and thus in the correct priority order with permanent services installed at the S-CSCF. Hence, a mechanism according to the invention may be embedded in the 3GPP IPMM domain.

## Claims

1. A method of managing a plurality of services (309,310,311;1305;1611,1612,1613) triggered by a message (1306;1609) of a session protocol controlling a communications session, the method comprising the steps of
- obtaining a number of rule modules each of which comprising a number of execution rules (308;401,402;1606,1607,1608) each execution rule specifying a condition (403,404,405) for invoking a service;
- processing a first one (1216) of said number of rule modules, said processing comprising processing at least a part of the execution rules of the first rule module in a predetermined order, a first execution rule (1606) causing a first service (1611) to be invoked, if the message fulfils a first condition, resulting in a first modified message (1615); and a second execution rule (1607) causing a second service (1612) to be invoked with the first modified message as an input, if the first modified message fulfils a second condition; said processing of the first rule module resulting in a first accumulatively modified message (1206);
- invoking processing a second one (1217) of said number of rule modules providing the first accumulatively modified message as an input;
**characterised in that** the first rule module has assigned to it a privilege indicative of an authority to alter a lock flag related to a predetermined part of the accumulatively modified message, said lock flag specifying whether said predetermined part of the accumulatively modified message may be modified by services invoked from at least the second rule module.

2. A method according to claim 1, **characterised in that** each rule module has associated with it a priority indicative of an order of processing of said number of rule modules.

3. A method according to claim 1 or 2, **characterised in that** each rule module corresponds to a rule module owner (409) authorised to edit the rule module.

4. A method according to any one of claims 1 through 3, **characterised in that** the step of invoking processing the second rule module further comprises the step of setting said lock flag to prevent modification of the predetermined part of the accumulatively modified message by services invoked from the second rule module, unless the lock flag was marked unset by the first rule module.

5. A method according to any one of claims 1 through 4, **characterised in that** the step of obtaining a number of execution rules further comprises the step of detecting a predetermined contractual relationship based on header information of the message; and selecting a number of rule modules based on said detected contractual relationship.

6. A method according to any one of claims 1 through 5, **characterised in that** the step of processing the first rule module (1216) further comprises the step of invoking a predetermined third rule module (1220).

7. A method according to any one of the claims 1 through 6, **characterised in that** the first and second rule modules are related to respective first and second access control lists (411) specifying access rights to the corresponding first or second rule module.

8. A method according to any one of the claims 1 through 7, **characterised in that** the first and second rule modules comprise respective first and second scripts in a predetermined mark-up language.

9. A method according to any one of claims 1 through 8, **characterised in that** the message comprises a first and a second set of attributes; the execution rules are grouped into at least a first and a second processing class (903,904) of execution rules according to corresponding constraints, where the second processing class is restricted to only modify attributes of the second set of attributes; and the method further comprises the step of repeating the steps of processing the first rule module (901) and invoking processing the second rule module (902), where in each repetition the processing of the first and second rule modules is limited to execution rules of a corresponding processing class, and where each repetition results in a corresponding accumulatively modified message which is used as an input for a subsequent repetition.

10. A method according to claim 9, **characterised in that** the processing classes are defined separately for execution rules triggered by requests (607) and responses (608) of the session protocol.

11. A method according to claim 9 or 10, **characterised in that** the first set of attributes comprises signalling properties of the message.

12. A method according to any one of the claims 9 through 11, **characterised in that** the processing classes correspond to predetermined locations in a round trip message flow according to the session protocol.

13. A method according to any one of the claims 9 through 12, **characterised in that** the processing classes include a first processing class (P1) of execution rules which impact signalling properties (702) of the message, a second processing class of execution rules (P2) which impact non-signalling message body content (704) of the message, and a third processing class (P3) of execution rules which neither impact the signalling properties nor the non-signalling message body content of the message.

14. A method according to claim 13, **characterised in that** a resulting modified message (703) is generated when all execution rules of the first and second processing classes are processed.

15. A method according to any one of the claims 1 through 14, **characterised in that** invoking the first service further results in a second modified message; and the method further comprises the steps of processing subsequent execution rules with the first modified message as an input; and processing subsequent execution rules with the second modified message as an input.

16. A method according to any one of the claims 1 through 15, **characterised in that** the method further comprises the steps of
storing information about which services are executed and information about which order the services are executed in;
receiving from the first service a request for returning a notification to the first service, if a predetermined event occurs;
storing the request in relation to the stored information; and
upon occurrence of the event, notifying the first service according to the stored information.

17. A method according to any one of the claims 1 through 16, **characterised in that** the execution modules comprise computer-readable scripts, and the predetermined order of processing the execution rules is determined by the order of execution rules in said scripts.

18. A method according to any one of the claims 1 through 17, **characterised in that** the session is related to a number of subscribers including a caller and a callee; a service is adapted to be triggered by a request from a subscriber; and the method further comprises the step of invoking services requested by the caller before invoking any service requested by the callee.

19. A method according to any one of the claims 1 through 18, **characterised in that** the session protocol is a session initiation protocol.

20. A method according to any one of the claims 1 through 19, **characterised in that** the communications session is a multimedia session.

21. A method according to any one of the claims 1 through 20, **characterised in that** the execution rules are adapted to be dynamically updated.

22. A data processing system comprising a service execution environment module (201;301) adapted to invoke a plurality of services (309,310,311) triggered by a message of a session protocol controlling a communications session; wherein the data processing system further comprises a storage medium (307) adapted to store a plurality of rule modules each of which comprising a number of execution rules each execution rule specifying a condition for invoking a service; and
the service execution environment module comprises a rule engine module (303) adapted to
- retrieve a number of rule modules;
- process a first one of said number of rule modules, said processing comprising processing at least a part of the execution rules of the first rule module in a predetermined order, a first execution rule causing a first service to be invoked, if the message fulfils a first condition, resulting in a first modified message; and a second execution rule causing a second service to be invoked with the first modified message as an input, if the first modified message fulfils a second condition; said processing of the first rule module resulting in a first accumulatively modified message; and
- invoke processing a second one (1217) of said number of rule modules providing the first accumulatively modified message as an input;
**characterised in that** the first rule module has assigned to it a privilege indicative of an authority to alter a lock flag related to a predetermined part of the accumulatively modified message, said lock flag specifying whether said predetermined part of the accumulatively modified message may be modified by services invoked from at least the second rule module.

23. A data processing system according to claim 22, **characterised in that** the rule engine module is adapted to interpret a predetermined rule execution specification language.

24. A data processing system according to claim 22 or 23, **characterised in that** the rule engine module further comprises a rule base processor module (1601) adapted to retrieve the execution rules; and a rule module processing module (314;1604,1605) adapted to process the execution rules.

25. A software program comprising code means adapted to perform, when executed on a data processing system, the steps of the method of any one of the claims 1 through 21.

26. A software program according to claim 25, **characterised in that** the software program is embodied on a computer-readable medium.

27. A data record comprising a rule module for use in a method of any one of the claims 1 through 21.

## Patentansprüche

1. Verfahren zum Managen einer Vielzahl von Diensten (309, 310, 311; 1305; 1611, 1612, 1613), getriggert durch eine Nachricht (1306; 1609) von einem Sitzungsprotokoll, das eine Kommunikationssitzung steuert, wobei das Verfahren die Schritte umfasst
- Erhalten einer Zahl von Regelmodulen, von denen jedes eine Zahl von Ausführungsregeln (308; 401, 402; 1606, 1607, 1608) umfasst, wobei jede Ausführungsregel eine Bedingung (403, 404, 405) zum Aufrufen eines Dienstes spezifiziert;
- Verarbeiten eines ersten (1216) der Zahl von Regelmodulen, die Verarbeitung umfassend Verarbeitung mindestens eines Teils der Ausführungsregeln des ersten Regelmoduls in einer vorbestimmten Reihenfolge, einer ersten Ausführungsregel 1 (1606), die bewirkt, dass ein erster Dienst (1611) aufzurufen ist, falls die Nachricht eine erste Bedingung erfüllt, was zu einer ersten modifizierten Nachricht (1615) führt; und einer zweiten Ausführungsregel (1607), die bewirkt, dass ein zweiter Dienst (1612) mit der ersten modifizierten Nachricht als eine Eingabe aufzurufen ist, falls die erste modifizierte Nachricht eine zweite Bedingung erfüllt; wobei die Verarbeitung des ersten Regelmoduls zu einer ersten akkumulativ modifizierten Nachricht (1206) führt;
- Aufrufen einer Verarbeitung eines zweiten (1217) der Zahl von Regelmodulen, was die erste akkumulativ modifizierte Nachricht als eine Eingabe vorsieht; **gekennzeichnet dadurch, dass** das erste Regelmodul zu sich ein Privileg zugewiesen hat, das eine Autorität anzeigt, ein Sperrflag zu ändern, das sich auf einen vorbestimmten Teil der akkumulativ modifizierten Nachricht bezieht, wobei das Sperrflag spezifiziert, ob der vorbestimmte Teil der akkumulativ modifizierten Nachricht durch Dienste modifiziert werden kann, die von mindestens dem zweiten Regelmodul aufgerufen werden.

2. Verfahren nach Anspruch 1, **gekennzeichnet dadurch, dass** jedes Regelmodul mit sich eine Priorität verbunden hat, die eine Reihenfolge einer Verarbeitung der Zahl von Regelmodulen anzeigt.

3. Verfahren nach Anspruch 1 oder 2, **gekennzeichnet dadurch, dass** jedes Regelmodul einem Regelmodulbesitzer (409) entspricht, der autorisiert ist, das Regelmodul zu editieren.

4. Verfahren nach einem beliebigen von Ansprüchen 1 bis 3, **gekennzeichnet dadurch, dass** der Schritt zum Aufrufen einer Verarbeitung des zweiten Regelmoduls ferner den Schritt zum Setzen des Sperrflags umfasst, um eine Modifikation des vorbestimmten Teils der akkumulativ modifizierten Nachricht durch Dienste zu verhindern, die von dem zweiten Regelmodul aufgerufen werden, es sei denn, das Sperrflag wurde durch das erste Regelmodul als nicht gesetzt markiert.

5. Verfahren nach einem beliebigen von Ansprüchen 1 bis 4, **gekennzeichnet dadurch, dass** der Schritt zum Erhalten einer Zahl von Ausführungsregeln ferner den Schritt zum Erfassen einer vorbestimmten vertraglichen Beziehung basierend auf Headerinformation der Nachricht; und Auswählen einer Zahl von Regelmodulen basierend auf der erfassten vertraglichen Beziehung umfasst.

6. Verfahren nach einem beliebigen von Ansprüchen 1 bis 5, **gekennzeichnet dadurch, dass** der Schritt zum Verarbeitung des ersten Regelmoduls (1216) ferner den Schritt zum Aufrufen eines vorbestimmten dritten Regelmoduls (1220) umfasst.

7. Verfahren nach einem beliebigen der Ansprüche 1 bis 6, **gekennzeichnet dadurch, dass** die ersten und zweiten Regelmodule auf jeweilige erste und zweite Zugriffssteuerlisten (411) bezogen sind, die Zugriffsrechte auf das entsprechende erste oder zweite Regelmodul spezifizieren.

8. Verfahren nach einem beliebigen der Ansprüche 1 bis 7, **gekennzeichnet dadurch, dass** die ersten und zweiten Regelmodule jeweilige erste und zweite Skripte in einer vorbestimmten Auszeichnungssprache umfassen.

9. Verfahren nach einem beliebigen von Ansprüchen 1 bis 8, **gekennzeichnet dadurch, dass** die Nachricht eine erste und eine zweite Menge von Attributen umfasst; die Ausführungsregeln in mindestens eine erste und eine zweite Verarbeitungsklasse (903, 904) von Ausführungsregeln gemäß entsprechenden Beschränkungen gruppiert sind, wobei die zweite Verarbeitungsklasse eingeschränkt ist, nur Attribute der zweiten Menge von Attributen zu modifizieren; und das Verfahren ferner den Schritt zum Wiederholen der Schritte einer Verarbeitung des ersten Regelmoduls (901) und Aufrufen einer Verarbeitung des zweiten Regelmoduls (902) umfasst, wobei in jeder Wiederholung die Verarbeitung der ersten und zweiten Regelmodule auf Ausführungsregeln einer entsprechenden Verarbeitungsklasse begrenzt ist, und wobei jede Wiederholung zu einer entsprechenden akkumulativ modifizierten Nachricht führt, die als eine Eingabe für eine nachfolgende Wiederholung verwendet wird.

10. Verfahren nach Anspruch 9, **gekennzeichnet dadurch, dass** die Verarbeitungsklassen getrennt für Ausführungsregeln definiert sind, die durch Anfragen (607) und Antworten (608) des Sitzungsprotokolls getriggert werden.

11. Verfahren nach Anspruch 9 oder 10, **gekennzeichnet dadurch, dass** die ersten Menge von Attributen Signalisierungseigenschaften der Nachricht umfasst.

12. Verfahren nach einem beliebigen der Ansprüche 9 bis 11, **gekennzeichnet dadurch, dass** die Verarbeitungsklassen vorbestimmten Standorten in einem Rundlaufnachrichtenfluss gemäß dem Sitzungsprotokoll entsprechen.

13. Verfahren nach einem beliebigen der Ansprüche 9 bis 12, **gekennzeichnet dadurch, dass** die Verarbeitungsklassen eine erste Verarbeitungsklasse (P1) von Ausführungsregeln, die Signalisierungseigenschaften (702) der Nachricht beeinflussen, eine zweite Verarbeitungsklasse von Ausführungsregeln (P2), die einen Nicht-Signalisierungsnachrichtenrumpfinhalt (704) der Nachricht beeinflussen, und eine dritte Verarbeitungsklasse (P3) von Ausführungsregeln, die weder die Signalisierungseigenschaften noch den Nicht-Signalisierungsnachrichtenrumpfinhalt der Nachricht beeinflussen, inkludieren.

14. Verfahren nach Anspruch 13, **gekennzeichnet dadurch, dass** eine resultierende modifizierte Nachricht (703) generiert wird, wenn alle Ausführungsregeln der ersten und zweiten Verarbeitungsklassen verarbeitet sind.

15. Verfahren nach einem beliebigen der Ansprüche 1 bis 14, **gekennzeichnet dadurch, dass** Aufrufen des ersten Dienstes ferner zu einer zweiten modifizierten Nachricht führt; und das Verfahren ferner die Schritte zum Verarbeiten nachfolgender Ausführungsregeln mit der ersten modifizierten Nachricht als eine Eingabe; und Verarbeiten nachfolgender Ausführungsregeln mit der zweiten modifizierten Nachricht als eine Eingabe umfasst.

16. Verfahren nach einem beliebigen der Ansprüche 1 bis 15, **gekennzeichnet dadurch, dass** das Verfahren ferner die Schritte umfasst
Speichern von Information darüber, welche Dienste ausgeführt werden, und Information darüber, in welcher Reihenfolge die Dienste ausgeführt werden;
Empfangen von dem ersten Dienst einer Anfrage zum Rückgeben einer Benachrichtigung zu dem ersten Dienst, falls ein vorbestimmtes Ereignis eintritt;
Speichern der Anfrage in Bezug auf die gespeicherte Information; und
bei Eintreten des Ereignisses Benachrichtigen des ersten Dienstes gemäß der gespeicherten Information.

17. Verfahren nach einem beliebigen der Ansprüche 1 bis 16, **gekennzeichnet dadurch, dass** die Ausführungsmodule computerlesbare Skripte umfassen, und die vorbestimmte Reihenfolge einer Verarbeitung der Ausführungsregeln durch die Reihenfolge von Ausführungsregeln in den Skripten bestimmt wird.

18. Verfahren nach einem beliebigen der Ansprüche 1 bis 17, **gekennzeichnet dadurch, dass** sich die Sitzung auf eine Zahl von Teilnehmern bezieht, inkludierend einen Anrufer und einen Angerufenen; ein Dienst angepasst ist, durch eine Anfrage von einem Teilnehmer getriggert zu werden; und das Verfahren ferner den Schritt zum Aufrufen von Diensten umfasst, die durch den Anrufer angefordert werden, vor Aufrufen eines beliebigen Dienstes, der durch den Angerufenen angefordert wird.

19. Verfahren nach einem beliebigen der Ansprüche 1 bis 18, **gekennzeichnet dadurch, dass** das Sitzungsprotokoll ein Sitzungsinitiierungsprotokoll ist.

20. Verfahren nach einem beliebigen der Ansprüche 1 bis 19, **gekennzeichnet dadurch, dass** die Kommunikationssitzung eine Multimediasitzung ist.

21. Verfahren nach einem beliebigen der Ansprüche 1 bis 20, **gekennzeichnet dadurch, dass** die Ausführungsregeln angepasst sind, dynamisch aktualisiert zu werden.

22. Datenverarbeitungssystem, umfassend ein Dienstausführungsumgebungsmodul (201; 301), angepasst, eine Vielzahl von Diensten (309, 310, 311) aufzurufen, die durch eine Nachricht eines Sitzungsprotokolls getriggert werden, das eine Kommunikationssitzung steuert; wobei das Datenverarbeitungssystem ferner ein Speichermedium (307) umfasst, das angepasst ist, eine Vielzahl von Regelmodulen zu speichern, von denen jedes eine Zahl von Ausführungsregeln umfasst, wobei jede Ausführungsregel eine Bedingung zum Aufrufen eines Dienstes spezifiziert; und
das Dienstausführungsumgebungsmodul ein Regelantriebsmodul (303) umfasst, das angepasst ist
- eine Zahl von Regelmodulen abzufragen;
- ein erstes der Zahl von Regelmodulen zu verarbeiten, die Verarbeitung umfassend Verarbeitung mindestens eines Teils der Ausführungsregeln des ersten Regelmoduls in einer vorbestimmten Reihenfolge, einer ersten Ausführungsregel, die bewirkt, dass ein erster Dienst aufzurufen ist, falls die Nachricht eine erste Bedingung erfüllt, was zu einer ersten modifizierten Nachricht führt; und einer zweiten Ausführungsregel, die bewirkt, dass ein zweiter Dienst mit der ersten modifizierten Nachricht als eine Eingabe aufzurufen ist, falls die erste modifizierte Nachricht eine zweite Bedingung erfüllt; wobei die Verarbeitung des ersten Regelmoduls zu einer ersten akkumulativ modifizierten Nachricht führt; und
- eine Verarbeitung eines zweiten (1217) der Zahl von Regelmodulen aufzurufen, die die erste akkumulativ modifizierte Nachricht als eine Eingabe vorsieht;
**gekennzeichnet dadurch, dass** das erste Regelmodul zu sich ein Privileg zugewiesen hat, das eine Autorität anzeigt, ein Sperrflag zu ändern, das sich auf einen vorbestimmten Teil der akkumulativ modifizierten Nachricht bezieht, wobei das Sperrflag spezifiziert, ob der vorbestimmte Teil der akkumulativ modifizierten Nachricht durch Dienste modifiziert werden kann, die von mindestens dem zweiten Regelmodul aufgerufen werden.

23. Datenverarbeitungssystem nach Anspruch 22, **gekennzeichnet dadurch, dass** das Regelantriebsmodul angepasst ist, eine vorbestimmte Regelausführungsspezifikationssprache zu interpretieren.

24. Datenverarbeitungssystem nach Anspruch 22 oder 23, **gekennzeichnet dadurch, dass** das Regelantriebsmodul ferner ein Regelbasisprozessormodul (1601), angepasst, die Ausführungsregeln abzufragen; und ein Regelmodulverarbeitungsmodul (314; 1604, 1605), angepasst, die Ausführungsregeln zu verarbeiten, umfasst.

25. Softwareprogramm, umfassend Codemittel, angepasst, wenn in einem Datenverarbeitungssystem ausgeführt, die Schritte des Verfahrens von einem beliebigen der Ansprüche 1 bis 21 durchzuführen.

26. Softwareprogramm nach Anspruch 25, **gekennzeichnet dadurch, dass** das Softwareprogramm auf einem computerlesbaren Medium verkörpert ist.

27. Datensatz, umfassend ein Regelmodul zur Verwendung in einem Verfahren von einem beliebigen der Ansprüche 1 bis 21.

## Revendications

1. Procédé de gestion d'une multiplicité de services (309, 310, 311; 1305; 1611, 1612, 1613) déclenchés par un message (1306; 1609) d'un protocole de session commandant une session de communication, le procédé comprenant les étapes suivantes :
- on obtient un nombre de modules de règles comprenant chacun un nombre de règles d'exécution (308; 401, 402; 1606, 1607, 1608), chaque règle d'exécution spécifiant une condition (403, 404, 405) pour invoquer un service;
- on traite un premier (1216) du nombre de modules de règles, ce traitement comprenant le traitement d'au moins une partie des règles d'exécution du premier module de règles, dans un ordre prédéterminé, une première règle d'exécution (1606) occasionnant l'invocation d'un premier service (1611), si le message remplit une première condition, ce qui conduit à un premier message modifié (1615); et une seconde règle d'exécution (1607) occasionnant l'invocation d'un second service (1612) avec le premier message modifié comme une information d'entrée, si le premier message modifié remplit une seconde condition; le traitement du premier module de règles conduisant à un premier message modifié de façon cumulative (1206);
- on invoque le traitement d'un second (1217) du nombre de modules de règles, en fournissant à titre d'information d'entrée le premier message modifié de façon cumulative;
**caractérisé en ce qu'**un privilège indiquant une autorité pour modifier un drapeau de verrouillage lié à une partie prédéterminée du message modifié de façon cumulative, est assigné au premier module de règles, ce drapeau de verrouillage spécifiant si la partie prédéterminée du message modifié de façon cumulative peut être modifiée ou non par des services invoqués au moins à partir du second module de règles.

2. Procédé selon la revendication 1, **caractérisé en ce qu'**une priorité indiquant un ordre de traitement du nombre de modules de règles est associée à chaque module de règles.

3. Procédé selon la revendication 1 ou 2, **caractérisé en ce que** chaque module de règles correspond à un possesseur de module de règles (409) autorisé à modifier le module de règles.

4. Procédé selon l'une quelconque des revendications 1 à 3, **caractérisé en ce que** l'étape d'invocation du traitement du second module de règles comprend en outre l'étape d'instauration du drapeau de verrouillage pour empêcher une modification de la partie prédéterminée du message modifié de façon cumulative par des services invoqués à partir du second module de règles, à moins que le drapeau de verrouillage n'ait été marqué à l'état non instauré par le premier module de règles.

5. Procédé selon l'une quelconque des revendications 1 à 4, **caractérisé en ce que** l'étape d'obtention d'un nombre de règles d'exécution comprend en outre l'étape consistant à détecter une relation contractuelle prédéterminée basée sur une information d'entête du message; et à sélectionner un nombre de modules de règles sur la base de la relation contractuelle détectée.

6. Procédé selon l'une quelconque des revendications 1 à 5, **caractérisé en ce que** l'étape de traitement du premier module de règles (1216) comprend en outre l'étape consistant à invoquer un troisième module de règles prédéterminé (1220).

7. Procédé selon l'une quelconque des revendications 1 à 6, **caractérisé en ce que** les premier et second modules de règles sont liés à des première et seconde listes de commande d'accès (411) respectives, spécifiant des droits d'accès au premier ou second module de règles correspondant.

8. Procédé selon l'une quelconque des revendications 1 à 7, **caractérisé en ce que** les premier et second modules de règles comprennent des premier et second scripts respectifs en un langage de balisage prédéterminé.

9. Procédé selon l'une quelconque des revendications 1 à 8, **caractérisé en ce que** le message comprend un premier et un second ensembles d'attributs; les règles d'exécution sont groupées en au moins une première et une seconde classe de traitement (903, 904) de règles d'exécution, conformément à des contraintes correspondantes, la seconde classe de traitement étant restreinte à modifier seulement des attributs du second ensemble d'attributs; et le procédé comprend en outre l'étape consistant à répéter les étapes de traitement du premier module de règles (901) et d'invocation du traitement du second module de règles (902), dans lequel dans chaque répétition le traitement des premier et second modules de règles est limité à des règles d'exécution d'une classe de traitement correspondante, et dans lequel chaque répétition donne un message modifié de façon cumulative correspondant qui est utilisé comme une information d'entrée pour une répétition suivante.

10. Procédé selon la revendication 9, **caractérisé en ce que** les classes de traitement sont définies séparément pour des règles d'exécution déclenchées par des demandes (607) et des réponses (608) du protocole de session.

11. Procédé selon la revendication 9 ou 10, **caractérisé en ce que** le premier ensemble d'attributs comprend des propriétés de signalisation du message.

12. Procédé selon l'une quelconque des revendications 9 à 11, **caractérisé en ce que** les classes de traitement correspondent à des emplacements prédéterminés dans un flux de messages aller et retour en conformité avec le protocole de session.

13. Procédé selon l'une quelconque des revendications 9 à 12, **caractérisé en ce que** les classes de traitement comprennent une première classe de traitement (P1) de règles d'exécution qui influent sur des propriétés de signalisation (702) du message, une seconde classe de traitement de règles d'exécution (P2) qui influent sur un contenu de corps de message ne concernant pas la signalisation (704) du message, et une troisième classe de traitement (P3) de règles d'exécution qui n'influent ni sur les propriétés de signalisation ni sur le contenu de corps de message, ne concernant pas la signalisation, du message.

14. Procédé selon la revendication 13, **caractérisé en ce qu'**un message modifié résultant (703) est généré lorsque toutes les règles d'exécution des première et seconde classes de traitement sont traitées.

15. Procédé selon l'une quelconque des revendications 1 à 14, **caractérisé en ce que** l'invocation du premier service conduit en outre à un second message modifié; et le procédé comprend en outre les étapes consistant à traiter des règles d'exécution suivantes avec le premier message modifié en tant qu'information d'entrée; et à traiter des règles d'exécution suivantes avec le second message modifié en tant qu'information d'entrée.

16. Procédé selon l'une quelconque des revendications 1 à 15, **caractérisé en ce que** le procédé comprend en outre les étapes suivantes :
on stocke une information concernant les services qui sont exécutés et une information concernant l'ordre dans lequel les services sont exécutés;
on reçoit à partir du premier service une demande de retour d'une notification au premier service, si un événement prédéterminé se produit;
on stocke la demande en relation avec l'information stockée; et
lorsque l'événement se produit, on adresse une notification au premier service conformément à l'information stockée.

17. Procédé selon l'une quelconque des revendications 1 à 16, **caractérisé en ce que** les modules d'exécution comprennent des scripts lisibles par ordinateur, et l'ordre de traitement prédéterminé des règles d'exécution est déterminé par l'ordre de règles d'exécution dans ces scripts.

18. Procédé selon l'une quelconque des revendications 1 à 17, **caractérisé en ce que** la session est liée à un nombre d'abonnés incluant un demandeur et un demandé; un service est adapté pour être déclenché par une demande provenant d'un abonné; et le procédé comprend en outre l'étape consistant à invoquer des services demandés par le demandeur, avant d'invoquer un service quelconque demandé par le demandé.

19. Procédé selon l'une quelconque des revendications 1 à 18, **caractérisé en ce que** le protocole de session est un protocole de commencement de session.

20. Procédé selon l'une quelconque des revendications 1 à 19, **caractérisé en ce que** la session de communication est une session multimédia.

21. Procédé selon l'une quelconque des revendications 1 à 20, **caractérisé en ce que** les règles d'exécution sont adaptées pour être actualisées de façon dynamique.

22. Système de traitement de données comprenant un module d'environnement d'exécution de services (201; 301) adapté pour invoquer une multiplicité de services (309, 310, 311) déclenchés par un message d'un protocole de session commandant une session de communication; dans lequel le système de traitement de données comprend en outre un support de stockage (307) adapté pour stocker une multiplicité de modules de règles, chacun d'eux comprenant un nombre de règles d'exécution, chaque règle d'exécution spécifiant une condition pour appeler un service; et
le module d'environnement d'exécution de services comprend un module de moteur de règles (303) adapté pour
- extraire un nombre de modules de règles;
- traiter un premier du nombre de modules de règles, ce traitement comprenant le traitement d'au moins une partie des règles d'exécution du premier module de règles, en un ordre prédéterminé, une première règle d'exécution occasionnant l'invocation d'un premier service, si le message remplit une première condition, ce qui conduit à un premier message modifié; et une seconde règle d'exécution occasionnant l'invocation d'un second service avec le premier message modifié en tant qu'information d'entrée, si le premier message modifié remplit une seconde condition; le traitement du premier module de règles conduisant à un premier message modifié de façon cumulative; et
- invoquer le traitement d'un second (1217) du nombre de modules de règles, en fournissant en tant qu'information d'entrée le premier message modifié de façon cumulative;
**caractérisé en ce qu'**un privilège indiquant une autorité pour modifier un drapeau de verrouillage lié à une partie prédéterminée du message modifié de façon cumulative, est assigné au premier module de règles, ce drapeau de verrouillage spécifiant si la partie prédéterminée du message modifié de façon cumulative peut être modifiée ou non par des services invoqués au moins à partir du second module de règles.

23. Système de traitement de données selon la revendication 22, **caractérisé en ce que** le module de moteur de règles est adapté pour interpréter un langage de spécification d'exécution de règles prédéterminé.

24. Système de traitement de données selon la revendication 22 ou 23, **caractérisé en ce que** le module de moteur de règles comprend en outre un module de processeur de base de règles (1601) adapté pour extraire les règles d'exécution; et un module de traitement de module de règles (314; 1604, 1605) adapté pour traiter les règles d'exécution.

25. Programme informatique comprenant une structure de code adaptée pour accomplir les étapes du procédé de l'une quelconque des revendications 1 à 21, lorsqu'elle est exécutée sur un système de traitement de données.

26. Programme informatique selon la revendication 25, **caractérisé en ce que** le programme informatique est matérialisé sur un support lisible par ordinateur.

27. Enregistrement de données comprenant un module de règles pour l'utilisation dans un procédé de l'une quelconque des revendications 1 à 21.
